# EUROPEAN PATENT SPECIFICATION

(11) **EP 2 738 067 B1**
(45) Date of publication and mention of the grant of the patent: **10.04.2019**
(21) Application number: 12819871.0
(22) Date of filing: 19.07.2012
(51) Int. Cl.: B62D 6/00, B62D 5/04, B62D 113/00

(54) **DEVICE FOR CONTROLLING STEER-BY-WIRE STEERING DEVICE HAVING REDUNDANCY FUNCTION**
VORRICHTUNG ZUR STEUERUNG EINER STEER-BY-WIRE-LENKVORRICHTUNG MIT REDUNDANZFUNKTION
DISPOSITIF DE COMMANDE DE DISPOSITIF DE DIRECTION PAR CÂBLE PRÉSENTANT UNE FONCTION DE REDONDANCE

(30) Priority: 29.07.2011 JP 2011167090
(43) Date of publication of application: 04.06.2014
(73) Proprietor: NTN Corporation, Osaka-shi, Osaka 550-0003 (JP)
(72) Inventor: NISHIKAWA, Akiyoshi, Iwata-shi Shizuoka 438-0037 (JP); OKADA, Koichi, Iwata-shi Shizuoka 438-0037 (JP); NAKAJIMA, Akio, Iwata-shi Shizuoka 438-0037 (JP); ZHANG, Yingjie, Iwata-shi Shizuoka 438-0037 (JP)
(74) Representative: Maikowski & Ninnemann Patentanwälte Partnerschaft mbB
(86) International application number: PCT/JP2012/068267
(87) International publication number: WO 2013/018548

(56) References cited:
- WO-A1-2010/082458
- WO-A1-2011/001904
- WO-A1-2011/001904
- JP-A- 2003 146 229
- JP-A- 2004 010 024
- JP-A- 2004 010 024
- JP-A- 2005 349 845
- JP-A- 2008 126 752
- JP-A- 2010 069 895
- JP-A- 2010 069 895
- JP-A- 2010 149 540
- JP-A- 2010 149 540
- JP-A- 2011 001 041
- JP-A- 2011 084 178

## Description

### BACKGROUND OF THE INVENTION

### (Field of the Invention)

The present invention relates to a steer-by-wire steering device of a kind capable of accomplishing a steering with a steering wheel that is not mechanically connected with a turning shaft for turning use and, more particularly, to a control device for the steer-by-wire steering device of a type having a redundancy function in which a mechanical system and a control device are provided with respective redundancies.

### (Description of Related Art)

A device such as, for example, a turning device, which is likely to result in a serious accident when a trouble occurs therein, a high degree of redundancy is needed. As a measure to deal with it, a steer-by-wire steering device has been suggested in, for example, the patent document 1 listed below, which is so designed and so configured that even in the event of the failure of a main motor for turning a steering shaft, such turning shaft can be steered by a sub motor. Although this suggested example is of a type provided with a failsafe function by which the sub motor is activated in the event of the failure of the main motor to operate properly, the steer-by-wire steering device disclosed in the patent document 1 referred to above is not economical since the sub motor does not function in any way when and so long as the main motor is properly functioning.

In an attempt to alleviate the uneconomical feature of the steer-by-wire steering device discussed above, the patent document 2 listed below, for example, suggests a steer-by-wire steering device of a kind in which while a motor for use in toe angle adjustment is used as a sub motor, in the event of the failure of the main motor to operate properly, the main motor is disengaged and the sub motor for the toe angle adjustment is utilized for steering. It has, however, been found that although the turning function is necessitated as a minimum required control for controlling the running of a vehicle particularly where in the event of the failure of the motor for turning use, the vehicle can be evacuated to a safe place or can be driven to the nearest repair shop, the toe angle adjusting function is not essential as a minimum required control. Because of it, the utilization of the motor for the toe angle adjustment to divert in the event of the trouble occurring in the main motor eliminates the need of an auxiliary motor of a kind that is not utilized constantly and, hence, a failsafe function may be obtained at a low cost.

### [Prior Art Documents]

[Patent Document] JP Laid-open Patent Publication No. 2005-349845
[Patent Document] JP Laid-open Patent Publication No. 2011-84178
[Patent Document] WO 2011/001904 A1
[Patent Document] WO 2010/082458 A1
A steer-by-wire steering device according to the preamble of independent claim 1 is disclosed in WO 2010/082458 A1.

### SUMMARY OF THE INVENTION

The example suggested in the patent document 2 referred to above appears excellent because the fail safe function may be obtained in the event of an abnormality occurring in the motor for turning use and, also, the motor does not incur waste. It has, however, been found that the patent document 2 referred to above is silent as to the use of the fail safe function afforded by a control device such as, for example, an ECU (electric control unit) and no redundancy cannot be held in the event of the failure of the control device. Although the control redundancy may be obtained when the control device is multiplexed, the mere multiplexing may incur a considerable waste in the control device in the event of such control device functioning properly and, therefore, the use thereof is difficult to achieve.

In view of the foregoing, the present invention has for its primary object to provide a control device for a steer-by-wire steering device having a redundancy function, in which multiplexing for the purpose of securing the redundancy, which works out in the event of the failure of the main motor for turning use and the control device, and a high functionality that utilizes a multiplexed portion at normal operating times are concurrently employed. In the description that follows, the summary of the present invention will be discussed with the aid of reference numerals employed in the accompanying drawings that illustrate embodiments of the present invention.

A control device for the steer-by-wire steering device having the redundancy, which is designed in accordance with the present invention, is a control unit 5 to control a steer-by-wire steering device 100 of a type including a turning shaft 10 having its left and right ends provided with respective tie rods 11, a steering wheel 1, a reactive force actuator 4 to apply a steering reactive force to the steering wheel 1, first and second steering angle sensors 2A and 2B to detect the steering angle of the steering wheel 1, a main motor 6 and a sub motor 7, a turning power transmission mechanism 18 to transmit a rotation of the main motor 6 to the turning shaft 10, a toe angle adjusting power transmission mechanism 30 to adjust the toe angle through rotation of the sub motor 7, and a switch mechanism 17 capable of switching to an abnormal case switched mode in which the main motor 6 is detached from the turning power transmission mechanism 18 to enable rotation of the sub motor 7 to be transmitted to the turning power transmission mechanism 18 to thereby enable a turning.

The control unit 5 referred to above the control device comprising first control device 101 and a second control device 201, which communicate with each other. The first control device 101 includes a basic control function unit 102 to control the reactive force actuator 4 and the sub motor 7 upon receipt of a detection signal of the first steering angle sensor 2A, the second control device 201 includes a basic control function unit 202 to control the main motor 6 upon receipt of a detection signal of the second steering angle sensor 2B. Each of the first and second control devices 101 and 201 includes a mutual trouble diagnosis unit to diagnosis a mutual trouble 103 and 203. The second control device 201 includes a main motor failure diagnosis unit 205 to diagnosis a failure of the main motor 6 and then to transmit a result of diagnosis to the first control device 101. The first control device 101 includes an abnormal case switch command unit 106 to switch the switch mechanism 17 over to the abnormal case switched mode when the first control device 101 receives from the second control device 201 a result of diagnosis that the main motor 6 fails or when the mutual trouble diagnosis unit 103 diagnoses that the second control device 201 is in a trouble.

According to the present invention, the first and second control devices 101 and 201 communicate with each other and a mutual trouble diagnosis is carried out by the resistive mutual trouble diagnosis units 103 and 203. The second control device 201 diagnoses a failure in the main motor 6 through the main motor failure diagnosis unit 205. The abnormal case switch command unit 106 provided in the first control device 101, when receiving from the second control device 201 a result of diagnosis that the main motor 6 fails to operate, switches the switch mechanism 17 over to the abnormal case switched mode to allow the sub motor 7 to execute the turning. Not only in the event of the failure of the main motor 6, but also in the event of a trouble occurring in the second control device then controlling the main motor 6, no normal turning by means of the main motor 6 is performed. For this reason, the sub motor 7 controlled by the first control device 101 then free from any trouble is used for turning purpose and, accordingly a safe turning can be accomplished.

Although as the control unit 5 two control devices, that is, the first control device 101 and the second control device 201 are employed, the first control device 101 has, as its basic function, a function to control the reactive force actuator 4 and the sub motor 7 while the second control device 201 has, as its basic function, a function to control the main motor 6. Also, the diagnosis of the failure in the main motor 6 is carried out by the second control device 201 and the diagnosis of the failure in the sub motor 7 is carried out by the first control device. Yet, the first control device 101 and the second control device 201 have a mutual diagnosing function. Since the control device is divided in two systems and roles of those systems are properly shared in the manner described above, multiplexing for the purpose of securing the redundancy against the failure of the main motor 6 for turning use and the trouble in the second control device then controlling it may be obtained. Moreover, at a normal time, a highly sophisticated functionalization including the toe angle control and diagnosis of the first and second control devices 101 and 201, which utilize a multiplexed portion, may be obtained. In other words, multiplication for the securement of the redundancy and the highly sophisticated functionalization utilizing the multiplexed portion at the normal time can be concurrently used.

It is to be noted that the first and second steering angle sensors 2A and 2B may not be necessarily two sensors that are completely independent from each other and may be of a type having a function of detecting and outputting independently from each other. By way of example, they may be accommodated within the same sensor casing and may be of a type in which a sensor target such as, for example, an encoder or the like is common to both of them. More specifically, relative to a common encoder that rotates together with the steering wheel 1, they may be two sensors disposed having been spaced 90° in terms of electric angle so as to detect the direction of rotation and capable of performing outputs that are different 90° in phase from each other.

Also, the sensor target of the first and second steering angle sensors 2A and 2B may not be necessarily connected mechanically with the steering wheel 1 and may be of a type capable of rotating in synchronism with the steering wheel 1. For example, the first steering angle sensor 2A may be operable to detect amount of movement of the steering reactive force actuator 4 to utilize a result of detection as an output of a result of detection of the steering angle of the steering wheel 1. For a highly accurate control of the steering reactive force actuator 4, a closed loop control utilizing sensors is needed, but the use of a sensor for use in control thereof as the first steering sensor 2A is effective to allow the two steering angle sensors 2A and 2B to be equipped with no waste.

In one embodiment of the present invention, the abnormal case switch command unit 106 may have a function of commanding the switch mechanism 17 to switch to the abnormal case switched mode when receiving a command from an external device 301 external to the first and second control devices. The external device 301 referred to above may be a control unit other than the first control device 101 and the second control device 201, an input means (not shown) within a driver's seat or the like. According to this structural feature, it can accommodate abnormalities of various forms and the turning by the sub motor 7 may be switched on.

In another embodiment of the present invention, the first control device 101 or the second control device 201 may include a sensor trouble diagnosis unit 107 or 207 to diagnose a trouble occurring in the second steering angle sensor 2B by comparing respective outputs of the first and second steering angle sensors 2A and 2B, in which case the abnormal case switch command unit 106, when receiving a result of diagnosis that the sensor trouble diagnosis unit 107 or 207 diagnoses that the second steering angle sensor 2B is in a trouble, switches the switch mechanism 17 over to the abnormal case switched mode. Since the second control device 201 performs, through its basic control function unit 202, the control of the main motor 6 for turning use in response to a detection signal of the second steering angle sensor 2B, a proper turning does no longer take place when a trouble occurs in the second steering angle sensor 2B. In such case, by switching the switch mechanism 17 over to the abnormal case switched mode referred to above, the turning takes place by means of the sub motor 7, but the control can be accomplished with the use of the detection signal of the first steering angle sensor 2A then free from any abnormality and the proper turning is thus accomplished.

With respect to the trouble occurring in the second steering angle sensor 2B, the following countermeasure may be taken. That is, in a further embodiment of the present invention, the first control device 101 or the second control device 201 may include a sensor trouble diagnosis unit 107 or 207 to diagnose a trouble occurring in the second steering angle sensor 2B by comparing respective outputs of the first and second steering angle sensors 2A and 2B and, also, a sensor output transfer unit 108 to communicate an output of the first steering sensor 2A to the second control device 201 when receiving a result of diagnosis that the sensor trouble diagnosis unit 107 or 207 diagnosis a trouble occurring in the second steering sensor 2B, in which case the second control device 201 includes an available sensor switch unit 208 to execute a control of the main motor 6 by the basic control unit 202 with the use of an output of the first steering angle sensor 2A, which has been transferred from the sensor output transfer unit 108, instead of executing the control of the main motor 6 with the use of an output of the second steering angle sensor 2B. As described above, in the event that the sensor trouble is diagnosed and when a trouble occurs in the second steering angle sensor 2B, the second control device 201 switches the steering angle sensor to be used over to the first steering angle sensor 2A to thereby accomplish the turning by the main motor 6 even though the sensor trouble occurs.

In a still embodiment of the present invention, the second control device 201 may include a sensor trouble diagnosis unit 107 or 207 to diagnose a trouble occurring in the first steering angle sensor 2A by comparing respective outputs of the first and second steering angle sensors 2A and 2B and a sensor abnormality annunciation unit 209 to annunciate a result of diagnosis, performed by the sensor trouble diagnosis unit 107 or 207, that the first steering sensor is in a trouble to an annunciation unit 209 located within a room of a vehicle. Since the first steering angle sensor 2A is used in controlling the toe angle, the turning that is minimum required for driving is possible even in the event of the occurrence of the trouble. For this reason, without altering a control mode specifically, annunciating of the abnormality to the driver through the sensor abnormality annunciation unit 209 will become a proper measure against the sensor trouble.

In a still further embodiment of the present invention, the first control device 101 may include a sub motor failure diagnosis unit 105 to diagnose a failure in the sub motor 7, in which case the second control device 201 includes a sub motor abnormality annunciation unit 210 which is operable, upon receipt from the first control device 101 of a result of diagnose that the sub motor failure diagnosis unit 105 has diagnosed the failure in the sub motor 7, to annunciate such result of diagnosis to an annunciation unit 302 within a room of a vehicle. Since the sub motor 7 is used in controlling the toe angle, the turning that is minimum required for driving is possible even in the event of the occurrence of the trouble. For this reason, without altering a control mode specifically, annunciating of the abnormality to the driver through the sensor abnormality annunciation unit 210 will become a proper measure against the sensor trouble.

In a still further embodiment of the present invention, the second control device 201 may include a control device abnormality annunciation unit 211 operable to annunciate to an annunciation unit 302 within a room of a vehicle a result of diagnosis made by the mutual trouble diagnosis unit 203 that the first control device 101 is in a trouble. Since the first control device 101 is a device for controlling the reactive force actuator 4 and the sub motor 7, which is a motor for controlling the toe angle, if the second control device 201 is normal, the minimum required safe drive is possible. For this reason, in the event of the trouble occurring in the first control device 101, without altering a control mode specifically, annunciating of the abnormality to the driver through the sensor abnormality annunciation unit 211 will become a proper measure against the sensor trouble.

In a still further embodiment of the present invention, the first control device 101 may include a reactive force actuator failure diagnosis unit 109 to diagnose a failure in the reactive force actuator 4 and a reactive force abnormality annunciation unit 212 to annunciate to an annunciation unit 302 within a room of a vehicle a result of diagnosis of the failure made by the reactive force actuator failure diagnosis unit 109. The reactive force actuator 4 is used to provide the steering wheel with the reactive force to thereby improve the driver's sensation to steering and, accordingly, even in the event of the failure, the accurate steering with the steering wheel 1 is possible. For this reason, in the event that a trouble occurs in the reactive force actuator 4, without altering a control mode specifically, annunciating of the abnormality to the driver through the reactive force abnormality annunciation unit 212 will become a proper measure against trouble in the reactive force actuator.

In a still further embodiment of the present invention, the switch mechanism 17 is capable of switching to a toe angle fixed case switched mode, in which the toe angle adjusting power transmission mechanism 30 is brought to a transmission disabled condition to allow the main motor 6 to perform a turning and the first control unit 101 includes a sub motor failure detecting unit 105 to diagnose a failure in the sub motor 7 and a toe angle fix command unit 110 to command the switch mechanism 17 to switch to the toe angle fixed case switched mode in dependence on a result of detection made by the sub motor failure detecting unit 105. Although the toe angle control is a control to increase the driving comfort, the turning can be accomplished properly even in the event of the toe angle fixing. Accordingly, in the event of the failure of the sub motor 7 which is a motor for the toe angle control, disabling the power transmission by the toe angle adjusting power transmission mechanism 30 and performing the turning by means of the main motor 6 will be a proper measure.

### BRIEF DESCRIPTION OF THE DRAWINGS

In any event, the present invention will become more clearly understood from the following description of embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a block diagram showing a schematic structure of a control device for a steer-by-wire steering device designed in accordance with a embodiment of the present invention;
Fig. 2 is a block diagram showing a conceptual structure of the control device;
Fig. 3A is a horizontal sectional view showing a turning shaft drive unit in the steer-by-wire steering device when the turning shaft drive unit is functions properly;
Fig. 3B is a fragmentary enlarged view showing, on an enlarged scale, a portion of the turning shaft drive unit that is indicated by IIIB in Fig. 3A;
Fig. 4A is a horizontal sectional view showing a condition assumed at the time a toe angle adjusting motor in the turning shaft drive unit fails to operate properly;
Fig. 4B is a fragmentary enlarged view showing, on an enlarged scale, a portion of the turning shaft drive unit that is indicated by IVB in Fig. 4A;
Fig. 5A is a horizontal sectional view showing a condition assumed at the time a turning motor in the turning shaft drive unit fails to operate properly;
Fig. 5B is a fragmentary enlarged view showing, on an enlarged scale, a portion of the turning shaft drive unit that is indicated by VB in Fig. 5A;
Figs. 6A and 6B are longitudinal sectional views showing different conditions of connecting screw portions of a turning shaft, respectively;
Fig. 7 is a cross sectional view taken along the line VII-VII in Fig. 3A;
Figs. 8A and 8B are side views of a rotation regulation mechanism in the turning shaft drive unit, showing different conditions assumed by the rotation regulation mechanism, respectively;
Fig. 9 is a side view showing the shape of tooth tips of spline keys on a normal spline shaft;
Fig. 10A is a side view of one example of an intermediate shaft used in the turning shaft drive unit;
Fig. 10B is a front elevational view of the intermediate shaft shown in Fig. 10A;
Fig. 11A is a side view of another example of the intermediate shaft used in the turning shaft drive unit;
Fig. 11B is a front elevational view of the intermediate shaft shown in Fig. 11A;
Fig. 12A is a side view of a further example of the intermediate shaft used in the turning shaft drive unit;
Fig. 12B is a front elevational view of the intermediate shaft shown in Fig. 12A;
Fig. 13A is a side view of a still further example of the intermediate shaft used in the turning shaft drive unit;
Fig. 13B is a front elevational view of the intermediate shaft shown in Fig. 13A;
Fig. 14 is a block diagram showing a control device for the steer-by-wire steering device, which will be a comparative example 1;
Fig. 15 is a block diagram showing a control device for the steer-by-wire steering device, which will be a comparative example 2;
Fig. 16 is a block diagram showing a control device for the steer-by-wire steering device, which will be a comparative example 3;
Fig. 17 is a block diagram showing a control device for the steer-by-wire steering device, which will be a comparative example 4;
Fig. 18 is a block diagram showing a control device for the steer-by-wire steering device, which will be a comparative example 5;
Fig. 19 is a block diagram showing a control device for the steer-by-wire steering device, which will be a comparative example 6; and
Fig. 20 is a block diagram showing a control device for the steer-by-wire steering device, which will be a comparative example 7.

### DESCRIPTION OF EMBODIMENTS

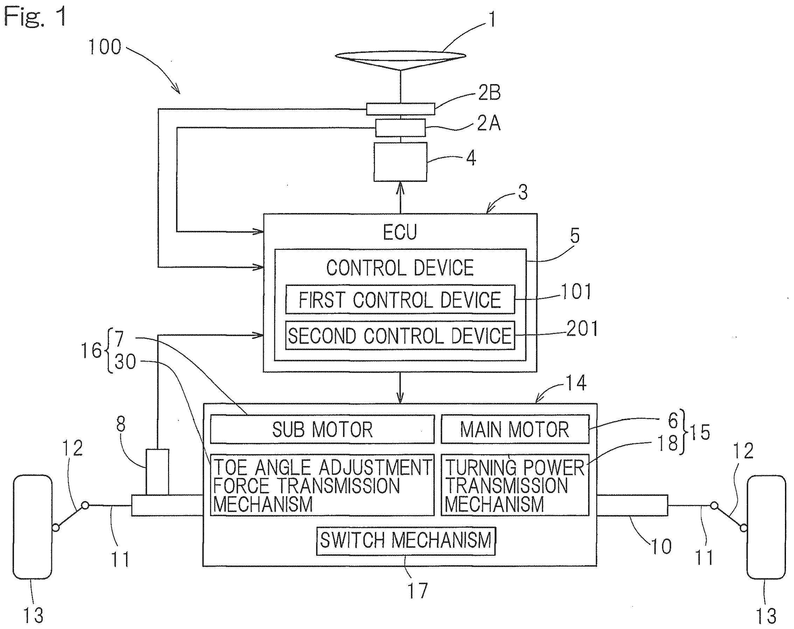

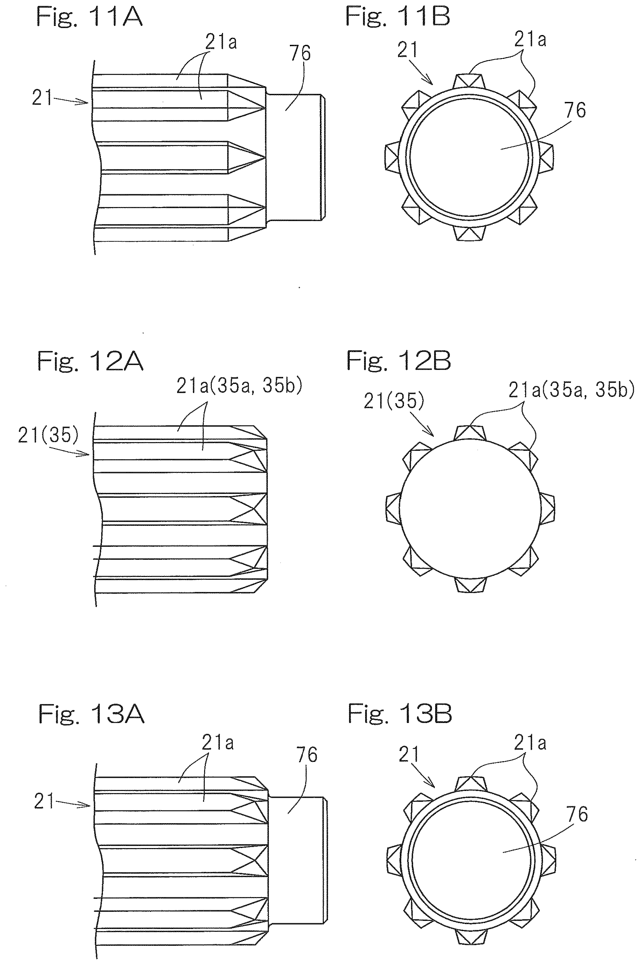

The present invention will be hereinafter described in detail in connection with some embodiments thereof with reference to Fig. 1 to Figs. 13A and 13B. In particular, Fig. 1 illustrates a schematic structure of a steer-by-wire steering device 100 and a control unit 5 therefor. The steer-by-wire steering device 100 includes a steering wheel 1 steered by a driver, first and second steering angle sensors 2A and 2B, a steering reactive force actuator 4, a turning shaft 10 for turning use, which is configured to be movable axially and is connected with left and right steered wheels 13 through respective knuckle arms 12 and tie rods 11, a turning shaft drive unit 14 for driving the turning shaft 10, and a turning angle sensor 8. The turning shaft 10 has a telescopically movable and separable structure such that, in addition to the turning brought about by the axial movement of the entirety of the turning shaft 10, a toe angle adjustment may be performed by the telescopic movement thereof.

The steering wheel 1 referred to above is not mechanically connected with the turning shaft 10 for turning use. The steering reactive force actuator 4 is a drive source for applying a reactive torque to the steering wheel 1 and is comprised of, for example, a motor or the like. Each of the first and second steering angle sensors 2A and 2B is a sensor for detecting the steering angle of the steering wheel 1. The first steering angle sensor 2A is a sensor for detecting amount of operation of the steering reactive force actuator 4, such as the angle of rotation, a torque generated or the like, and this sensor is concurrently used as a sensor for indirectly detecting the steering angle of the steering wheel 1 as a matter of convenience of acquiring a redundancy in the practice of this embodiment. The second steering angle sensor 2B is operable to detect the steering angle of the steering wheel 1 directly with no intervention of some actuators. The first steering angle sensor 2A may be employed exclusively as a sensor for directly detecting the steering angle of the steering wheel 1 in a fashion separately from a sensor for detecting the amount of operation of the steering reactive force actuator 4. As a sensor for directly detecting such as, for example, the second steering sensor 2B, a sensor for electrically detecting the angle of rotation, such as, for example, a resolver, an optical encoder, or a magnetic encoder may be employed.

The turning shaft drive unit 14 is provided with the turning shaft 10, a turning mechanism 15 for turning the steered wheels 13 shown in Fig. 1, a toe angle adjusting mechanism 16 for performing a toe angle adjustment of the steered wheels 13, and a switch mechanism 17 for switching between power transmission mechanisms 18 and 30 in the turning mechanism 15 and the toe angle adjusting mechanism 16, respectively. The turning mechanism 15 includes a main motor 6, which is a motor for turning use, and the turning power transmission mechanism 18 for transmitting the rotation of the main motor 6 to the turning shaft 10. The toe angle adjusting mechanism 16 includes a sub motor 7, which is a motor for toe angle adjustment use, and the toe angle adjusting power transmission mechanism 30 for transmitting the rotation of the sub motor 7 to the turning shaft 10.

The switch mechanism 17 is capable of switching from a normal time switched mode, in which the turning and the toe angle adjustment are performed respectively through the turning power transmission mechanism 18 and the toe angle adjusting mechanism 16, to an abnormal case switched mode, in which the main motor 6 is detached from the turning power transmission mechanism 18 and the rotation of the sub motor 7 is transmitted to the turning power transmission mechanism 18 to enable the turning. Also, the switch mechanism 17 is also capable of switching to a toe angle fixing mode, in which the toe angle adjusting drive transmission mechanism 30 is held in a condition, in which the drive transmission is disabled, and only the turning by the main motor 6 is enabled. This switch mechanism 17 is comprised of a clutch mechanism and a combination thereof.

The control unit 5 is provided as a part of or separate from a main ECU (electric control unit) 3 for controlling the entirety of a vehicle and operable to perform a control associated with the turning and the toe angle adjustment. As a structure according to the embodiment now under discussion, this control unit 5 referred to above includes a first control device 101 and a second control device 201 which communicate with each other. Each of the first and second control devices 101 and 201 may be comprised of, for example, a microcomputer and electronic circuits including a control program therefor. While the first control device 101 and the second control device 201 are so constructed with mutually independent hardware resources that they are independent from each other, that is, respective processing functions may be obtained by different electronic component parts, the first and second control devices 101 and 201 may be accommodated within a common housing (not shown) or provided on a common circuit substrate.

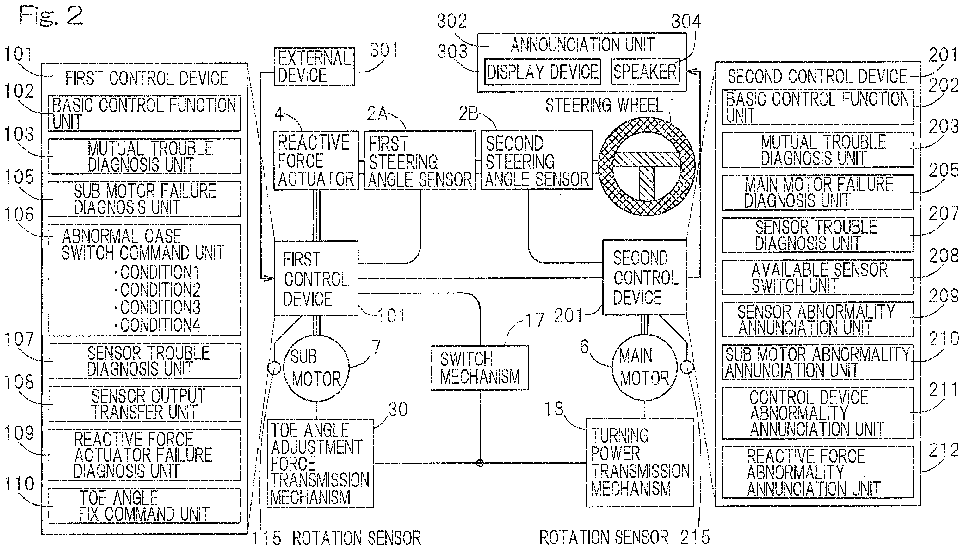

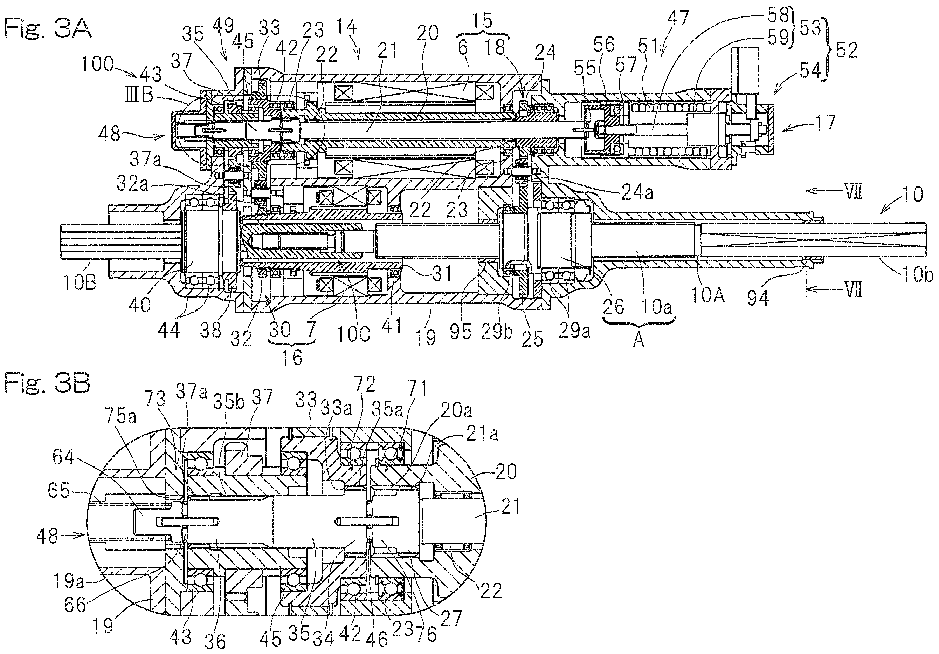

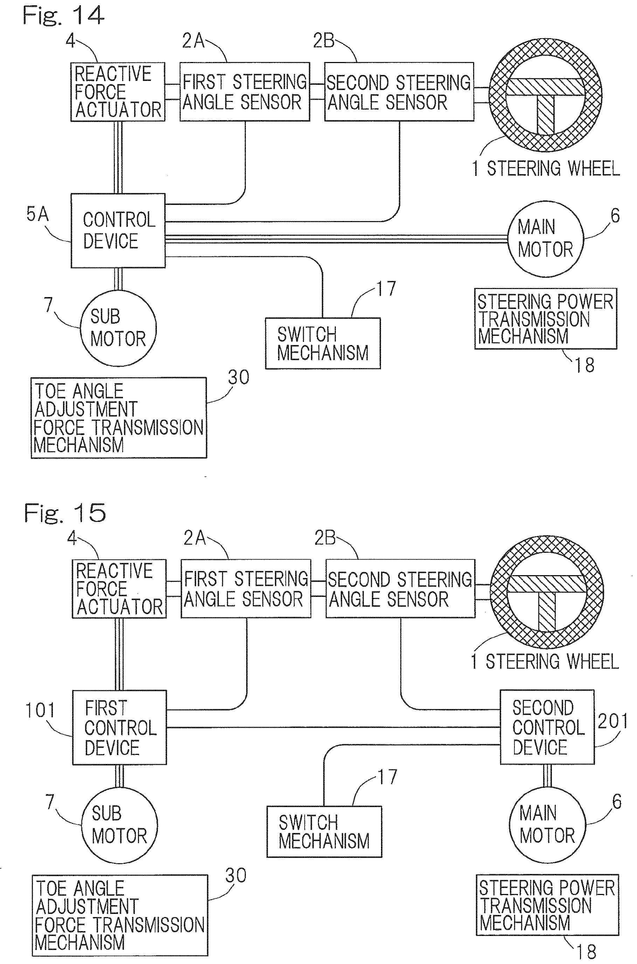

The structure of the control unit 5 will now be described with particular reference to Fig. 2 and will also be compared with comparative examples 1 to 7 shown respectively in Figs. 14 to 20. It is, however, to be noted that specific structural examples of the turning power transmission mechanism 18, the toe angle adjusting power transmission mechanism 30, and the switch mechanism 17 will be described later with particular reference to Figs. 3A and 3B to Figs. 13A and 13B.

In Fig. 2, the first control device 101 and the second control device 201 are shown at a center of the drawing in the form of respective blocks and component parts within those blocks are shown on left and right sides of the drawing, respectively. The first control device 101 has its basic function to control the drive of the reactive force actuator 4 and the sub motor 7 for tow angle adjustment use upon receipt of a detection signal fed from the first steering angle sensor 2A and includes a basic control function unit 102 for accomplishing this basic function. The basic control function unit 102 makes use of a detection signal descriptive of a rotation angle detected by a rotation sensor 115 for the sub motor 7 to perform a toe angle control for a normal running time. The second control device 201 has a basic function to control the drive of the main motor 6 for turning use upon receipt of a detection signal fed from the second steering angle sensor 2B and includes a basic control function unit 202 for accomplishing this basic function. The basic control function unit 202 makes use of a detection signal descriptive of a rotation signal detected by a rotation sensor 215 for the main motor 6 to perform the turning control for the normal running time.

The first and second control devices 101 and 201 have respective mutual trouble diagnosis units 103 and 203, which are operable to diagnose mutual troubles. The first control device 101 includes a sub motor failure diagnosis unit 105 for diagnosing a failure of the sub motor 7. The second control device 201 includes a main motor failure diagnosis unit 205 for diagnosing a failure of the main motor 6 and then transmitting the result of diagnosis to the first control device 101. The failure of each of the motors 6 and 7 may include, for example, a seizure of a rotor. Also, the first and second control devices 101 and 201 respectively include sensor trouble diagnosing devices 107 and 207 for detecting respective failures of the first and second turning angle sensors 2A and 2B. Those sensor trouble diagnosis units 107 and 207 are operable to compare a detection value of the first turning angle sensor 2A and a detection value of the second turning angle sensor 2B with each other so that a state of failure may be detected in accordance with a predetermined condition. The first control device 101 also includes a reactive force actuator failure diagnosis unit 109 for diagnosing a failure of the reactive force actuator 4.

The first control device 101 referred to above has an abnormal case switch command unit 106, which is operable to command the switch mechanism 17 to switch to the abnormal case switched mode in the event that a result of the determination of the following conditions (1) to (4), performed by such first control device 101 indicates the fulfillment of one or some of those conditions, so that the switch mechanism 17 may be allowed to assume the abnormal case switched mode.
Condition (1): Condition (1) is when a result of diagnosis the main motor 6 has failed is received from the main motor failure diagnosis unit 205 of the second control device 201.
Condition (2): Condition (2) is when the second control device 201 is diagnosed as failing by the mutual trouble diagnosis unit 103 of the first control device 101.
Condition (3): Condition (3) is when a command to switch to the abnormal case switched mode is received from an external device 301. The external device 301 is a device external to the first and second control devices 101 and 201. For example, it may include a control unit other than the control unit 5 in the ECU 3 shown in Fig. 1 or a device such as, for example, an input device (not shown) in a driver's seat.
Condition (4): Condition (4) is when a result of diagnosis that the second steering angle sensor has a trouble is received from the sensor trouble diagnosis unit 207 of the second control device 201. It is to be noted that in the case of the condition (4), without the mode being switched to the abnormal case switched mode, control may be performed by a sensor output transfer unit 108 and an available sensor switch unit 208, both of which will be described subsequently.

The sensor output transfer unit 108 is provided in the first control device 101 and is operable to communicate an output of the first steering angle sensor 2A to the second control device 201 with in the event that a result of diagnosis that a trouble has occurred in the second steering angle sensor 2B is received from the sensor trouble diagnosis unit 207 of the second control device 201. The available sensor switch unit 208 is provided in the second control device 201 and is operable to cause a control of the main motor 6 by the basic control unit 202 to be performed with the utilization of an output of the first steering angle sensor 2A, fed from the sensor output transfer unit 108, instead of the use of an output of the second steering angle sensor 2B. Whether or not the sensor output transfer unit 108 and the available sensor switch unit 208 are to be employed or whether arrangement should be so made that the mode should be switched by the abnormal case switch command unit 106 to the abnormal case switched mode when the condition (4) above is fulfilled are selectively determined.

The first control device 101 referred to above includes, in addition to the various units and components described hereinabove, a toe angle fix command unit 110 and is operable to cause the switch mechanism 17 to switch to the previously described toe angle fixed case switched mode in response to a result of detection by the sub motor failure detecting unit 105 that the sub motor 7 has failed.

The second control device 201 includes various annunciation units, that is, a sensor abnormality annunciation unit 209, a sub motor abnormality annunciation unit 210, a control device abnormality annunciation unit 211 and a reactive force abnormality annunciation unit 212. Those annunciation units 209 to 212 are operable to command an annunciation unit 302, provided at, for example, a driver's seat within a cabin of a vehicle, in the event of the occurrence of a prescribed minor abnormality without performing a control associated specifically with a movement of the vehicle. The minor abnormality referred to above is an abnormality of a nature with which a safe movement of the vehicle can be maintained. The annunciation unit 302 referred to above may be a display device 303 such as, for example, a liquid crystal display device and/or any suitable device capable of generating sounds such as, for example, a speaker 304. It is to be noted that the various annunciation units 209 to 212 may be provided in the first control device 101.

The sensor abnormality annunciation unit 209 is operable to command the annunciation unit 302 to make an annunciation that a trouble has occurred in the first steering angle sensor 2A, when the sensor trouble diagnosis unit 107 of the first control device 101 diagnoses that such trouble has occurred in the first steering angle sensor 2A and such result of the diagnosis is subsequently sent to the second control device 201.

The sub motor abnormality annunciation unit 210 is operable to command the annunciation unit 302 to make an annunciation of a diagnosis result that a failure has occurred in the sub motor 7, when the sub motor failure diagnosis unit 105 of the first control device 101 diagnoses that such trouble has occurred in the sub motor 7 and such result of the diagnosis is subsequently fed from the first control device 101 to the second control device 201.

The control device abnormality annunciation unit 211 is operable to command the annunciation unit 302 to make an annunciation of a diagnosis result that a trouble has occurred in the first control device 101, when such failure of the first control device 101 is diagnosed by the mutual trouble diagnosis unit 103 of the first control device 101. The control device abnormality annunciation unit 211 referred to above may be provided in the first control device 101 instead of being provided in the second control device 201.

The operation of the above described construction will now be described. The first and second control devices 101 and 201 communicate with each other and commonly share various pieces of information on, for example, the turning angles and, at the same time, allow the respective mutual trouble diagnosis units 103 and 203 to perform corresponding mutual trouble diagnoses. In each of the control devices 101 and 201, detection of a failure of the corresponding motor 6 or 7 is performed by the sub motor failure diagnosis unit 105, the main motor failure diagnosis unit 205, the sensor trouble diagnosis units 107 or 207, the reactive force actuator failure diagnosis unit 109 and other with the utilization of the various sensors. Also, through the communication between the first and second control devices 101 and 201, respective outputs of the first and second steering angle sensors 2A and 2B are compared constantly to detect a sensor trouble.

In the event that any one of the following conditions (A) to (C) is fulfilled, the abnormal case switch command unit 106 commands the switch mechanism 17 to switch to the abnormal case switched mode, that is, to a fail safe mode, in which the main motor 6 is disengaged from the turning angle power transmission mechanism 18 to transmit the rotation of the sub motor 7 to turning angle power transmission mechanism 18 to enable the turning. Condition (A): Condition (A) is when the result of diagnosis that the main motor 6 has failed is received from the motor failure diagnosis unit 205 of the second control device 201.
Condition (B): Condition (B) is when the mutual trouble diagnosis unit 103 of the first control device 101 has diagnosed that a trouble has occurred in the second control device 201.
Condition (C): Condition (C) is when a command to switch to the abnormal case switched mode is received from the external device 301.

Not only when the main motor 6 is failed, but also when a trouble occurs in the second control device 201 that controls the main motor 6, no normal turning by the main motor 6 is accomplished. Because of it, the utilization of the sub motor 7 that is controlled by the first control device 101 then free from any trouble makes it possible to accomplish a safe turning.

In the case of the following condition (D), the switch mechanism 17 may be switched over to the abnormal case switched mode by the abnormal case switch command unit 106 or, alternatively, any other control may be employed. Condition (D): Condition (D) is when the result of diagnosis that the second steering angle sensor 2B is in trouble is received from the sensor trouble diagnosis unit 207 of the second control unit 201.

The other control that may be taken in the case of the condition (D) above includes a control in which when the result of diagnosis that the second steering angle sensor 2B is in a trouble is received by the first control device 101 from the sensor trouble diagnosis unit 207 of the second control device 201, the output of the first steering angle sensor 2A is communicated to the second control device 201 by the available sensor switch unit 208 and the available sensor switch unit 208 of the second control device 201 executes the control of the main motor 6 by the basic control function unit 202 with the utilization of the output of the first steering angle sensor 2A fed from the sensor output transfer unit 108.

In the case of any of the following conditional abnormalities, the presence of an abnormality is transmitted by the annunciation units 209 to 212 through the annunciation unit 302, but no shift onto the abnormal case switched mode (fail safe mode) takes place.
W hen the second control device 201 detects an abnormality occurring in the first steering angle sensor 2A as a result of comparison of the respective outputs of the steering angle sensors 2A and 2B.
W hen the first control device 101 detects the failure of the sub motor 7 and it is transmitted through the communication to the second control unit 201.
W hen consequent upon the mutual trouble diagnosis, the second control device 201 diagnoses the trouble occurring in the first control device 101.
W hen the first control device 101 detects a failure of the reactive force actuator 4 (such as, for example, a drop of torque).

According to the foregoing embodiment, the following advantages may be obtained. As discussed hereinabove, while two control devices, that is, the first and second control devices 101 and 201 are employed as the control unit 5, the first control device 101 has, as its basic function, a function of controlling the reactive force actuator 4 and the sub motor 7 while the second control device 201 has, as its basic function, a function of controlling the main motor 6. Also, the diagnosis of the failure of the main motor 6 is carried out by the second control device 201 and the diagnosis of the failure of the sub motor 7 is carried out by the first control device 101. In addition, the first and second control devices 101 and 201 referred to above has a mutual diagnosing function.

As discussed above, since the control device is divided into two systems and the role of each of those systems is optimally shared, multiplexing for the securement of a redundancy with respect to the failure of the main motor 6 for turning use and the trouble of the second control device 201 for performing the control thereof may be obtained. Because of the redundancy referred to above, it is possible that, on the occasion that in the event of occurrence of a trouble the vehicle can be evacuated to the nearest safe place or the vehicle can be driven to the nearest repair shop, a safe turning may be enabled. In addition, sophisticated functionality of, for example, the toe angle control and the diagnosis of the first and second control devices by utilizing a multiplexed portion may be obtained at a normal time. In other words, the multiplexing for the purpose of securing the redundancy and the sophisticated functionality utilizing the multiplexed portion for the normal time may be concurrently accomplished.

Superiorities of the foregoing embodiment of the present invention lie in the following points.
- Even if any of the elements fails, failure of the turning function, which may lead to a serious accident, can be avoided.
- It provides a sophisticatedly functionalized structure in which the control device is divided into the two systems and the roles of those two systems are optimally commonly shared.
- It provides a structure having the minimized number of constituent elements and the minimized communication paths.

The superiority of the foregoing embodiments as compared with any of the first to seventh comparative examples 1 to 7 shown in Figs. 14 to 20 will be explained.

The first comparative example 1 shown in Fig. 14 is of a structure in which with the use of only one control unit 5A all of the controls associated with the turning and toe angle controls are executed. In this first comparative example, no redundancy can be maintained in the event of the fracture or the occurrence of an abnormality in the control unit 5A. In contrast thereto, in the practice of the foregoing embodiment, since the control function is properly shared by dividing the control unit 5 into the first and second control devices 101 and 201, the minimum required turning may be carried out safely even in the event of the fracture or the occurrence of an abnormality in any of the first and second control devices 101 and 201.

The second comparative example 2 shown in Fig. 15 is of a structure in which although the first and second control devices 101 and 201 are employed, a function of switching the switch mechanism 17 is set up in the second control device 201 for use in controlling the main motor 6. In this second comparative example, the switching is impossible in the event that an abnormality occurs in the control device 201 for use in controlling the main motor 6 and, hence, no redundancy may be maintained. In contrast thereto, in the foregoing embodiment, since the abnormal case switch command unit 106 for performing the switching of the switch mechanism 17 is provided in the first control device 101 for use in driving the sub motor, the switching may be accomplished even in the event of the occurrence of an abnormality in the second control device 201 for use in controlling the main motor 6. It is to be noted that the first control device 101 for use in controlling the sub motor, even though an abnormality occurs, can accomplish the turning by means of the main motor 6. It is, however, to be noted that in the event that an abnormality occurring in the first control device 101 is detected by, for example the mutual diagnosis unit 203 and others, it may be recommended to stop the first control device 101 or to interrupt the output thereof.

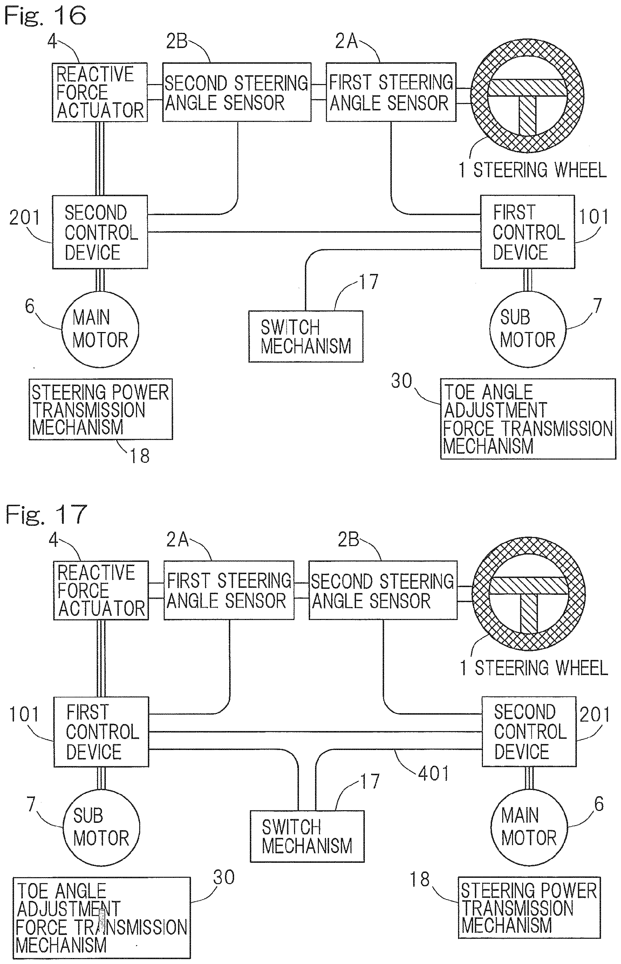

The third comparative example 3 shown in Fig. 16 is of a structure in which a control function of the reactive force actuator 4 is set up in the second control device 101 for use in controlling the main motor 6. In this third comparative example, a function equivalent to that of the foregoing embodiment may be obtained. However, there is a deviation in function to be shared between the first control device 101 for controlling only the sub motor 7, of which frequency of fuse is low, and the second control device 201 for controlling the main motor 6, which is driven constantly, and also controlling the reactive force actuator 4 and, hence, concentration of the amount of calculations occurs on the second control device 201. In contrast thereto, in the foregoing embodiment, since the control function of the reactive force actuator 4 is set up in the first control device 101 for controlling the sub motor 7, of which frequency of use is low, the amount of calculations may be well balanced between the first control device 101 and the second control device 201.

The fourth comparative example 4 shown in Fig. 17 is of a structure in which the function of switching the switch mechanism 17 is set up in both of the first and second control devices 101 and 201. The case in which the switching by means of the switch mechanism 17 is required is when the abnormality occurs in the main motor 6 and/or the second control device 201, and the control devices 101 and 201 have a mutual communication path. For this reason, no communication and control path 401 from the second control device 201 to the switch mechanism 17 is necessary and is therefore futile. In the foregoing embodiment, however, such a futile communication and control path 401 is not employed.

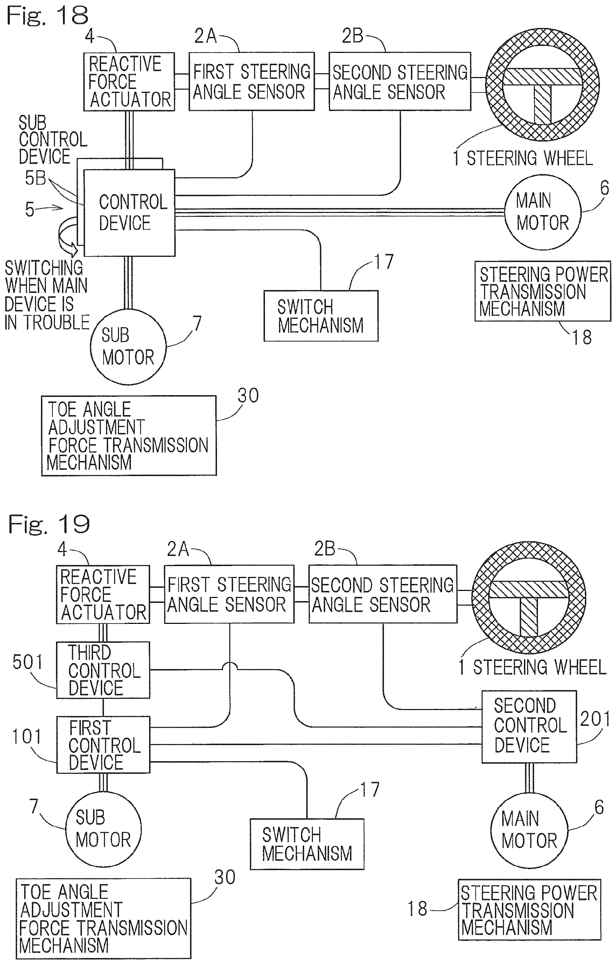

The fifth comparative example shown in Fig. 18 is of a structure in which a control unit 5B having all of the functions associated with the turning and toe angle adjustment is provided in two, one for a main use and the other for a sub use, and the control is switched over to the control unit 5B for the sub use in the event of occurrence of an abnormality in the control unit 5B for the main use. In the case of this example, the redundancy may be secured. However, wiring is complicated and the control unit 5 tends to become bulky. Also, too much waste occurs at the normal time. In contrast thereto, in the foregoing embodiment, since the control device is divided into two systems and the roles are properly shared, the number of constituent elements and number of communication paths can be minimized.

The sixth comparative example 6 shown in Fig. 19 is of a structure in which in addition to the first control device 101 for use in controlling the sub motor 7 and the second control device 201 for use in controlling the main motor 6, a third control unit 501 for use in controlling the reactive force actuator 4 is employed. In this case, the amount of communications between the control devices 101, 201 and 501 becomes too much and an advantage brought about by the increase of the control devices is minimal.

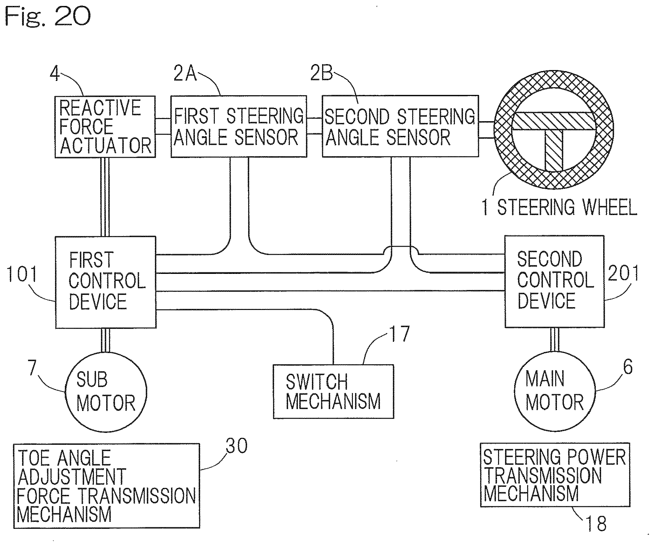

The seventh comparative example 7 shown in Fig. 20 is of a structure in which an output of the first steering angle sensor 2A is connected with both of the first and second control devices 101 and 201 and even the output of the second steering sensor 2B is connected with both of the first and second control devices 101 and 201. In this seventh comparative example 7, a higher redundancy than that afforded by the embodiment may be obtained. However, it is necessary to take into consideration the electrical separation of signal lines between the steering angle sensors 2A and 2B and the control devices 101 and 201. For example, in the event that the first control device 101 is broken down upon receipt of a high voltage, there is a risk that such high voltage is transmitted to the second control device 201 through a path extending through the first control device 101, then through the first steering angle sensor 2A and finally through the second control device 201 and, therefore, the second control device 201 may be broken down. For this reason, it is necessary to make an electric separation on this path, but it leads to an increase of the size and an increase of the cost. In the foregoing embodiment, however, such an electric separation is not required.

As can readily understood from the comparison with each of those first to seventh comparative examples 1 to 7, the foregoing embodiment is of a structure in which the control device is divided into two control devices and the role of each of those systems is properly shared to thereby have a highly sophisticated functionality, and, therefore, the structure can also have the superiority for which multiplexing for the securement of the redundancy and the highly sophisticated functionalization may be concurrently accomplished so that the failure of the turning function which will leads to a serious accident even when any one of the elements is in a trouble can be avoided and the number of the constituent elements and that of the communication paths may be minimized.

One example of a mechanical structural portion of a steer-by-wire steering device 100 will now be described in detail with particular reference to Figs. 3A and 3B to Figs. 13A and 13B. The turning shaft 10 is of two piece structure made up of a non-rotatable split shaft 10A and a rotatable split shaft 10B, and those split shafts 10A and 10B are connected with each other at a threaded engagement portion 10C coaxial with a shaft axis. Respective tip end portions of the non-rotatable split shaft 10A and the rotatable split shaft 10B that protrude outwardly from a housing 19 of the turning shaft drive unit 14 are connected with left and right tie rods 11 best shown in Fig. 1.

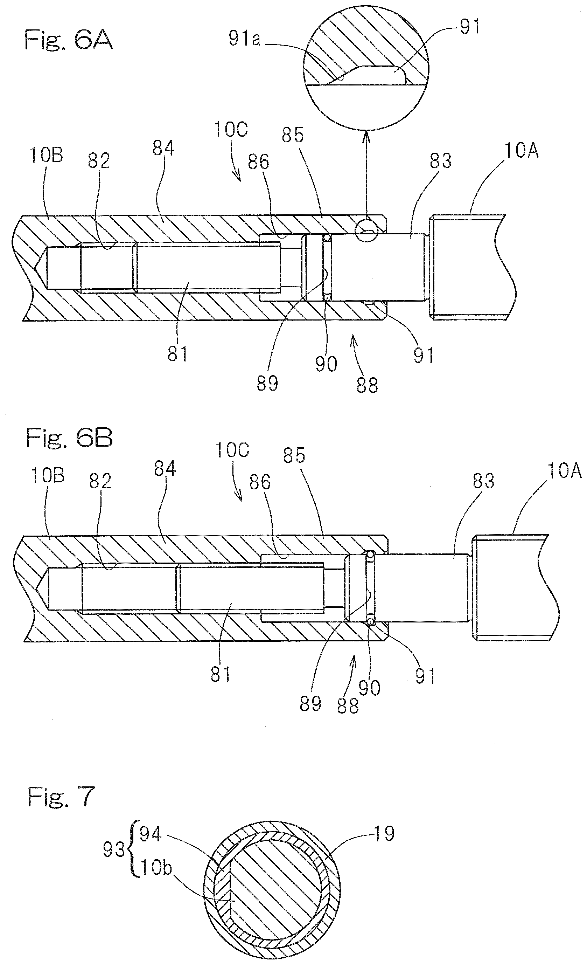

As shown in Figs. 6A and 6B, the threaded engagement portion 10C is made up of a male screw 81, provided in the non-rotatable split shaft 10A, and a female screw 82 provided in the non-rotatable split shaft 10B. The type of screw is preferably in the form of an angled screw or a trapezoidal screw. The threaded engagement portion 10C, in which the type of screw is in the form of either the angled screw or the trapezoidal screw, makes it possible to achieve a firm connection between the non-rotatable split shaft 10A and the rotatable split shaft 10B.

The male screw 81 is provided at a tip of a mounting shaft portion 83 that protrudes from a ball screw shaft portion 10a of the non-rotatable split shaft 10A towards the rotatable split shaft 10B. A female screw portion 82 is formed in an inner periphery of a tubular portion 84 of the rotatable split shaft 10B. The rotatable split shaft 10B is provided with an extended tubular portion 85 extending from the tubular portion 84 to the non-rotatable split shaft 10A, and the mounting shaft portion 83 referred to above is engaged in an inner diametric hole 86 of the extended tubular portion 85. The inner diametric hole 86 is coaxial with a shaft axis of the turning shaft 10.

The threaded engagement portion 10C referred to above is provided with a constraint mechanism 88 for preventing the mounting shaft portion 83 from dropping out of the inner diametric hole 86. This constraint mechanism 88 is made up of a circlip 90, engaged in an annular outer peripheral groove 89 formed in an outer periphery of the mounting shaft portion 83, and an annular inner peripheral groove 91 defined in an inner diametrical surface of the inner diametric hole 86. As shown in an fragmentary enlarged diagram of Fig. 6A, a step 91a of the inner peripheral groove 91 defined on one side remote from the non-rotatable split shaft 10A is so tapered as to permit the groove depth to be gradually reduced in a direction outwardly.

In a normal condition as shown in Fig. 6A, the circlip 90 and the inner peripheral groove 91 are displaced in position relative to each other in an axial direction and the circlip 90 is in a condition urged against the inner diametric surface of the inner diametric hole 86 with its diameter consequently reduced. When starting from this condition the rotatable split shaft 10B is rotated relative to the non-rotatable split shaft 10A, the length of threaded engagement in the threaded engagement portion 10C is adjusted. As shown in Fig. 6B, when the circlip 90 and the inner peripheral groove 91 are held in the same axial position, the circlip 90 is expanded by the effect of its own elastic force of repulsion with its diameter increasing and is finally engaged in the inner peripheral groove 91. Accordingly, the operation in a direction in which the length of threaded engagement in the threaded engagement portion 10C is shortened is regulated, thus making the mounting shaft portion 83 difficult to drop out of the inner diametric hole 86. Since a stepped face 91a of the inner peripheral groove 91 is so formed as to have a tapered shape of the previously described shape, the operation in the direction in which the length of threaded engagement in the threaded engagement portion 10C is shortened is not regulated.

The non-rotatable split shaft 10A is configured to be axially movable in a direction axially of the housing 19 for the turning shaft drive unit 14, but non-rotatable about an axis thereof by means of a whirl-stop mechanism 93. As best shown in Fig. 7, the whirl-stop mechanism 93 referred to above is made up of a non-coaxial round portion 10b, which is a portion of the non-rotatable split shaft 10A that is continued to the outside of the ball screw shaft portion 10a, and a sliding bearing 94 provided as fixed to the housing 19 and with which the non-coaxial round portion 10b referred to above is engaged for sliding movement in the axial direction. The shape of the non-coaxial round portion 10b as viewed in section in a direction orthogonal to the axial direction thereof is such that the outer shape is of a shape different from the concentric circle coaxial with the shaft center. In the example as shown, the non-coaxial round portion 10b is configured to have a sectional shape defined by cutting a portion of the circumference with a straight line, but may have any other sectional shape. The whirl-stop mechanism 93 of the structure described above is simple in structure and is capable to assuredly constraining the non-rotatable split shaft 10A of the turning shaft 10 from rotating relative to the housing 19.

The turning shaft 10 in its entirety is supported by the housing 19 in a manner described hereinafter. The non-rotatable split shaft 10A is supported not only by a double row angular contact ball bearing 29a and a deep groove ball bearing 29b through a ball nut 26, as will be described later, which is threadingly engaged with the ball screw shaft portion 10a, but also by the sliding bearing 94 referred to previously. Also, the rotatable split shaft 10B is supported by a rolling bearing 44 through a spline nut 40, as will be described later, which is in splined engagement with an outer periphery thereof. In addition, an outer diametric surface of the ball screw shaft portion 10a is supported by a sliding bearing 95. An axial position of the sliding bearing 95 is set to be between the threaded engagement portion 10C and the ball nut 26.

The turning mechanism 15 performs the turning of the left and right steered wheels 13 by moving the non-rotatable split shaft 10A and the rotatable split shaft 10B of the turning shaft 10 simultaneously in the axial direction. This turning mechanism 15 includes the main motor 6 and the turning power transmission mechanism 18 for driving the turning shaft 10 in the axial direction through the rotation of the main motor 6.

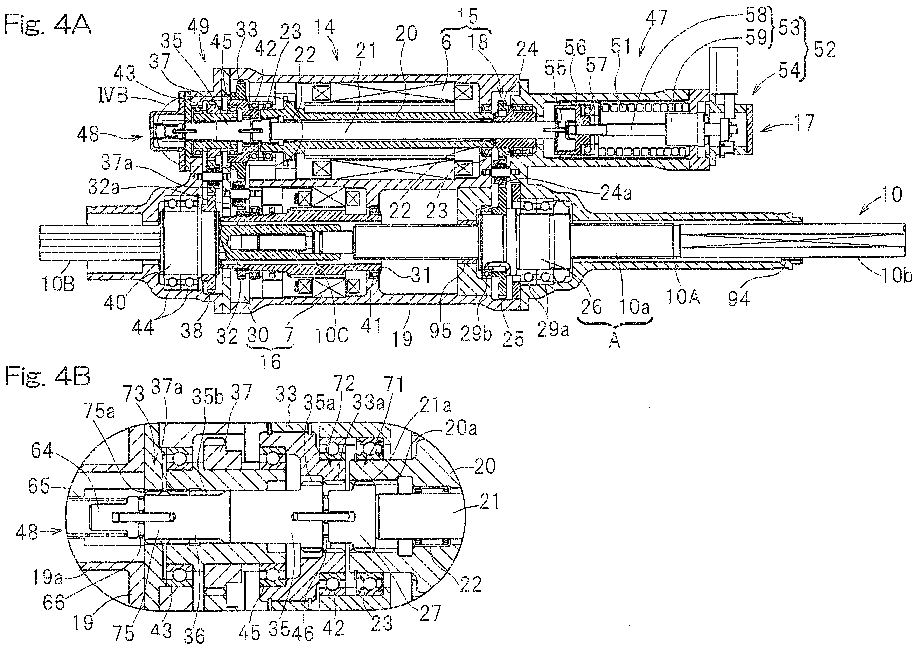

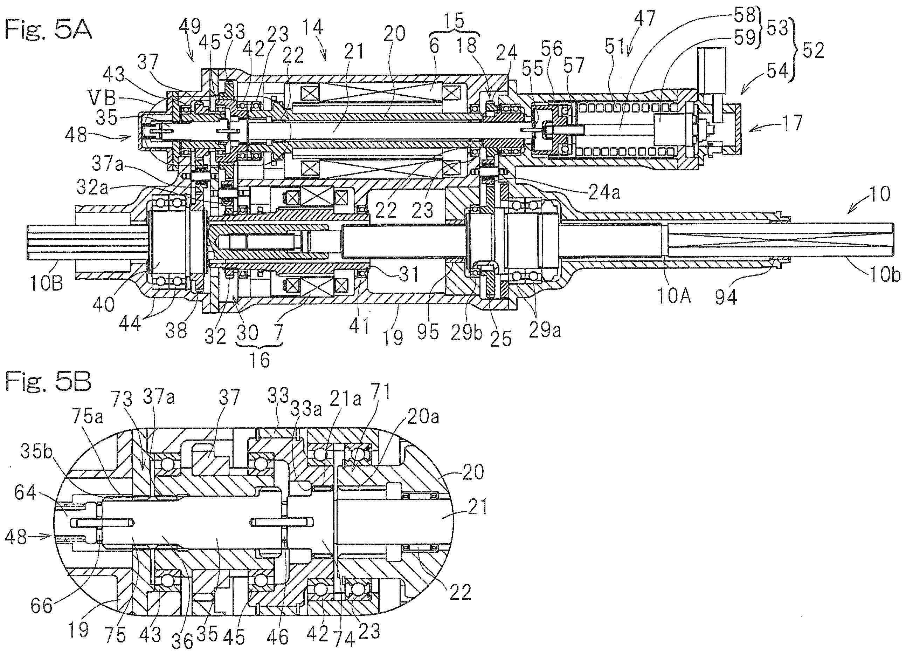

The main motor 6 is fitted to the housing 19 for the turning shaft drive unit 14 in parallel relation to the turning shaft 10. This main motor 6 is in the form of a hollow motor and has a hollow motor shaft 20 of a tubular shape. This hollow motor shaft 20 is rotatably supported by the housing 19 through a pair of bearings 23. Within the hollow of the hollow motor shaft 20, an intermediate shaft 21 for turning use provided parallel to the turning shaft 10 is rotatably and axially movably supported by a needle roller bearing 22. The intermediate shaft 21 for turning use is drivingly associated with a direct acting actuator 47 of the switch mechanism 17 so as to selectively assume, together with an intermediate shaft 35 for toe angle adjustment use as will be described later, one of a reference position as shown in Figs. 3A and 3B, a sub motor failure time position (a position assumed at the time of failure of the sub motor 7) as shown in Figs. 4A and 4B, and a main motor failure time position (a position assumed at the time of failure of the main motor 6) as shown in Fig. 5A and 5B.

The turning power transmission mechanism 18 includes the hollow motor shaft 20 of the main motor 6, the intermediate shaft 21 for turning use, an output gear 24 engaged with an outer periphery of the intermediate shaft 21 for turning use through keys (not shown) on the outer periphery of the intermediate shaft 21 so as to transmit the rotation, an input gear 25 meshed with the output gear 24 through a counter gear 24a, and the ball nut 26 fixed to the input gear 25 and threadingly engaged with the ball screw shaft portion 10a of the non-rotatable split shaft 10A of the turning shaft 10.

The input gear 24 is supported by the housing 19 through the rolling bearing 28. Also, the ball nut 26 is rotatably supported by the housing 19 through the dual row angular contact ball bearing 29a and the deep groove ball bearing 29b which are disposed axially on both sides. When the ball nut 26 is supported by a combination of the dual row angular contact ball bearing 29a and the deep groove ball bearing 29b, both of the axially acting load, which acts on the ball nut 26, and the movement load may be supported. Since the intermediate shaft 21 for turning use is, as hereinabove described, engaged with the hollow motor shaft 20 of the main motor 6 through the needle roller bearing 22 and also with the output gear 24 through the keys, the axial movement is permitted.

Spline teeth 20a in the form of internal teeth is formed on an inner periphery of the hollow motor shaft 20 and spline teeth 21a in the form of external teeth is formed on an outer periphery of the intermediate shaft 21 for turning use. In a normal condition of the turning shaft drive unit 14 as shown in Figs. 3A and 3B, the spline teeth 20a and 21a are engaged with each other to define a splined engagement 27 so that the hollow motor shaft 20 and the intermediate shaft 21 for turning use can be connected drivingly for rotation together therewith. The spline teeth 20a of the hollow motor shaft 20 are long enough in the axial direction and with which the spline teeth 21a of the intermediate shaft 21 for turning use can be engaged at any axial location.

When the turning shaft drive unit 14 is held in the normal condition as shown in Figs. 3A and 3B, the rotational output of the main motor 6 is transmitted to the ball nut 26 through the intermediate shaft 21 for turning use, the output gear 24, the counter gear 24a and the input gear 25. The resultant rotation of the ball nut 26 is converted into an axial movement of the turning shaft 10 to thereby accomplish the turning.

The toe angle adjusting mechanism 16 referred to previously alters the toe angle of the steered wheels 13 by rotating the rotatable split shaft 10B relative to the non-rotatable split shaft 10A to adjust the length of threaded engagement at the threaded engagement portion 10C to thereby alter the distance between the left and right tie rods. This toe angle adjusting mechanism 16 is provided with the sub motor 7 and the toe angle adjusting power transmission mechanism 30 for adjusting the toe angle through the rotation of the sub motor 7.

The sub motor 7 is fitted to the housing 19 of the turning shaft drive unit 14 in a fashion coaxial with the turning shaft 10. Even the sub motor 7 is in the form of a hollow motor and its hollow motor shaft 31 of a tubular shape is provided on an outer periphery of the threaded engagement portion 10C in the turning shaft 10.

The toe angle adjusting power transmission mechanism 30 referred to previously includes an output gear 32 fixed to the hollow motor shaft 31, a first intermediate gear 33 meshed with the output gear 32 through a counter gear 32a, a toe angle adjustment intermediate shaft 35 meshed with the first intermediate gear 33 at a splined engagement 34, a second intermediate gear 37 meshed with the toe angle adjustment intermediate shaft 35 at a splined engagement 36, an input gear 38 meshed with the second intermediate gear 37 through a counter gear 37a, and the spline nut 40 fixed to the input gear 38. The rotatable split shaft 10B of the turning shaft 10 is a spline shaft having tooth grooves on an outer periphery thereof and the spline nut 40 referred to above is splined thereto. The rotatable split shaft 10B and the spline nut 40 may be held in sliding contact with each other or, alternatively, in rolling contact with each other through balls (not shown). In either case, the rotation can be favorably transmitted from the spline nut 40 to the rotatable split shaft 10B.

The first and second intermediate gears 33 and 37 and the toe angle adjustment intermediate shaft 35 forms respective splined engagements 34 and 36 when spline teeth 33a and 37a, which are in the form of internal teeth formed in the intermediate gears 33 and 37, respectively, and spline teeth 35a and 35b, which are in the form of external teeth formed in the toe angle adjustment intermediate shaft 35, are meshed with each other. The spline teeth 35b of the toe angle adjustment intermediate shaft 35 is long enough in the axial direction and the spline teeth 37a of the second intermediate gear 37 can be meshed at any axial location.

The hollow motor shaft 31, the first intermediate gear 33, the second intermediate gear 37 and the spline nut 40 are supported by the housing 19 through a rolling bearing 41, a rolling bearing 42, a rolling bearing 43 and a rolling bearing 44, respectively. Also, a rolling bearing 45 intervenes between the first intermediate gear 33 and the second intermediate gear 37 and both of those gears 33 and 37 are rotatable with each other. Since the toe angle adjustment intermediate shaft 35 is meshed with the second intermediate gear 37 at a splined engagement 36, the axial movement thereof is permitted. The intermediate shaft 21 for turning use and the toe angle adjustment intermediate shaft 35 are disposed on the same shaft in a juxtaposed relation to each other and a thrust bearing 46 is interposed between opposed shaft ends of those intermediate shafts 21 and 35. Accordingly, both of the intermediate shafts 21 and 35 are configured to undergo a relative rotation.

During the normal condition of the turning shaft drive unit 14 as shown in Figs. 3A and 3B, the rotational output of the sub motor 7 is transmitted to the spline nut 40 through the hollow motor shaft 31, the output gear 32, the counter gear 32a, the first intermediate shaft 33, the toe angle adjustment intermediate shaft 35, the second intermediate gear 37, the counter gear 37a and the input gear 38. By the rotation of the spline nut 40, the rotatable split shaft 10B of the turning shaft 10 is rotated. When the rotatable split shaft 10B is thus rotated relative to the non-rotatable split shaft 10A, the length of threaded engagement of the threaded engagement portion 10C is adjusted to allow the turning shaft 10 to be telescopically expanded or contracted. Accordingly, by changing the distance between the left and right tie rods, the toe angle of the steered wheels 13 best shown in Fig. 1 is altered. At the time of this toe angle adjustment, the turning power transmission mechanism 18 and the toe angle adjusting power transmission mechanism 30 are operated in harmony with each other so that by the control of the steering control unit 5a the turning angles of the left and right steered wheels 13 can be brought to coincide with a target value in a manner as will be described later.

The switch mechanism 17 is used for changing the drive transmission system for the turning power transmission mechanism 18 and the toe angle adjusting power transmission mechanism 30 in the event of the failure of the main motor 6 and, also, the failure of the sub motor 7. This switch mechanism 17 includes the intermediate shaft 21 for turning use and the toe angle adjustment intermediate shaft 35, a direct acting actuator 47 for axially moving those intermediate shafts 21 and 35 simultaneously, a pressing mechanism 48 for applying a pressing force necessary to keep the intermediate shafts 21 and 35 urged to contact with each other constantly, and a transmission engaging and detaching mechanism 49 for selectively engaging or detaching each of transmission connections of a turning power transmission mechanism 18 and the toe angle adjusting power transmission mechanism 30 through the movement of the intermediate shafts 21 and 35.

The direct acting actuator 47 referred to above includes a spring member 51 and a spring engaging and detaching mechanisms 52. The spring engaging and detaching mechanism 52 is made up of a linear-rotary motion conversion mechanism 53 for converting the linear movement of the spring member 51 into a rotary motion and a rotation regulation mechanism 54 for regulating the rotary motion obtained by the linear-rotary motion conversion mechanism 53.

In this example, the spring member 51 is employed in the form of a compression spring and is used to bias a support member 55 in a leftward direction as viewed in Figs. 3A and 3B to Figs. 5A and 5B. In other words, the spring member 51 has a left end portion adjacent the support member 55, which portion undergoes a linear movement in a leftward and rightward direction. The support member 55 is provided having been juxtaposed to the intermediate shaft 21 for turning use in coaxial relation thereto. A thrust bearing 56 is provided between the support member 55 and the intermediate shaft 21 for turning use and a thrust roller bearing 57 is interposed between the support member 55 and the spring member 51, and the support member 55 is rotatable about a center axis.

Also, in this example, the linear-rotary motion conversion mechanism 53 is a ball screw mechanism and includes a ball screw shaft 58, which is integral with the support member 55, and a ball nut 59 threadingly engaged with the ball screw shaft 58. This linear-rotary motion conversion mechanism 53 may be any of mechanisms other than the ball screw mechanism and, for example, a rack and pinion assembly may be used therefor.

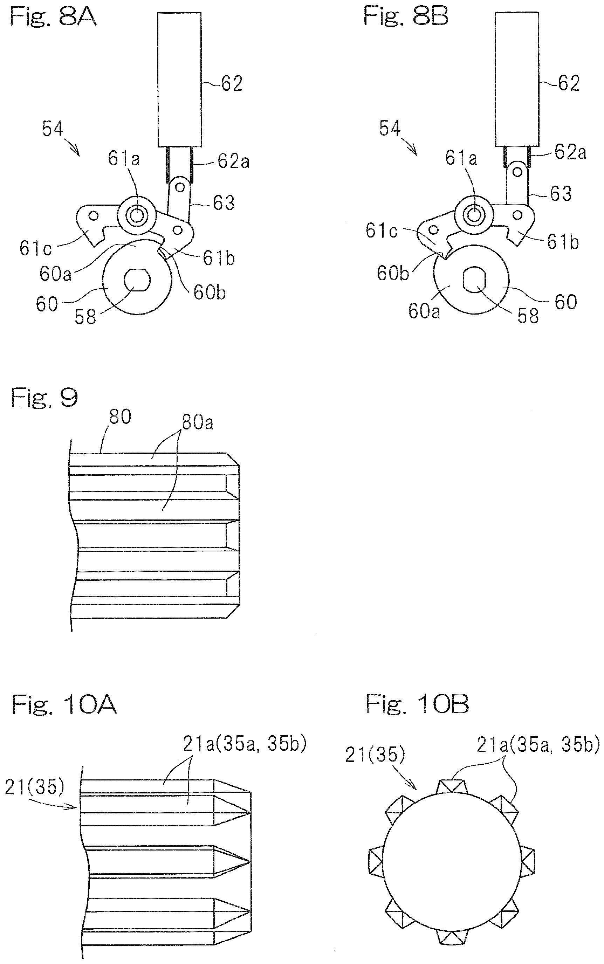

As shown in Figs. 8A and 8B, the rotation regulation mechanism 54 referred to above is constituted by a projecting element 60 provided in the ball screw shaft 58 that is a rotary shaft, a lever 61 having a function of stopping the rotation of the ball screw shaft 58 when it is caught on the projecting element 60, and a rotation regulation drive source 62 for actuating the lever 61. The projecting element 60 is a plate shaped member in which a portion of the outer periphery forms a projection 60a protruding radially outwardly beyond the remaining portion thereof and a stepped face 60b engageable with the lever 61 is formed in one circumferential end of the projection 60a. Strictly speaking, the projection 60a of the projecting element 60 is a projection by which the lever 61 is caught. The lever 61 is provided rotatably about a pivot center shaft 61a extending parallel to the ball screw shaft 58 and includes a pair of catch pieces 61b and 61c that are engageable with the projecting element 60. The rotation regulation drive source 62 referred to above is comprised of a direct acting actuator and is employed in the form of, for example, a linear solenoid. This rotation regulation drive source 62 includes an advancing and retracting rod 62a capable of undergoing an advancing and retracting movement in one direction (a vertical direction). The advancing and retracting rod 62a is connected with the lever 61 through a connecting link 63.

Fig. 8A illustrates a condition assumed by the rotation regulation mechanism 54 when the turning shaft driver unit 14 is held in the normal condition. In this condition, one of the catch pieces 61b of the lever 61 is engaged with the projection 60a of the projecting element 60 and, accordingly, rotation of the projecting element 60 and the ball screw shaft 58 integral therewith is constrained from rotating. For this reason, by the operation of the linear-rotary motion conversion mechanism 53 in the form of the ball screw mechanism, the ball screw shaft is unable to move in the axial direction and pressing of the spring member 51 (best shown in Fig. 3A) against the support member 55 (similarly best shown in Fig. 3A) is regulated. In other words, the spring member 51 is maintained in a compressed condition and is held in a non-biasing condition incapable of biasing the intermediate shafts 21 and 35 (best shown in Figs. 3A and 3B) in the axial direction.

When the advancing and retracting rod 62a of the rotation regulation drive source 62 is retracted from the condition as shown in Fig. 8A, the engagement between the catch piece 61b of the lever 61 and the projection 60a of the projecting element 60 is released to allow the ball screw shaft 58 to be rotatable. Accordingly, by the action of an elastic force of repulsion of the spring member 51, the ball screw shaft 58 is moved in the leftward direction, as viewed in Fig. 3A, while rotating relative to the ball nut 59. In other words, the spring member 51 is released from the compressed condition referred to above and is held in a condition biasing the intermediate shaft 21 and 35 in the axial direction. Upon rotation of the projecting element 60 through a predetermined phase, as shown in Fig. 8B, the projection 60a of the projecting element 60 is brought into engagement with the other catch piece 61c of the lever 61 and, accordingly the projecting element 60 and the ball screw shaft 58 are constrained from rotating. During this time, the intermediate shafts 21 and 35 are moved axially towards the leftward direction to assume a sub motor failure time position as shown in Figs. 4A and 4B.

When starting from the condition as shown in Fig. 8B the advancing and retracting rod 62a of the rotation regulation drive source 62 is advanced, the engagement between the catch piece 61c of the lever 61 and the projection 60a of the projecting element 60 is released, allowing the ball screw shaft 58 to be rotatable. Accordingly, in a manner similar to that described hereinabove, the spring member 51 is brought in position to axially bias the intermediate shafts 21 and 35 and, therefore, the intermediate shaft 21 and 35 are axially moved towards the left side. Accordingly, the projection 60 and the lever 61 are displaced from each other in the axial direction. For this reason, even though the projecting element 60 rotates the projection 60a does no longer engage any of the catch pieces 61b and 61c of the lever 61 and, therefore, the spring member 51 is allowed to move to an end of the range of linear movement. Respective positions of the intermediate shafts 21 and 35 assumed when the spring member 51 is moved to the end of the range of linear movement as described above represent the main motor failure time position as shown in Figs. 5A and 5B.

The spring engaging and detaching mechanism 52 referred to above may be explained as follows in terms of its function. Namely, the spring engaging and detaching mechanism 52 made up of an obstruction arranged within the range of linear movement of the spring member 51, or within a range of movement of the ball screw shaft 58 that undergoes a linear movement together with the spring member 51 so as to disturb the linear movement, and an obstruction removal mechanism B for removing the obstruction to thereby release the spring member 51 from the compressed condition. In this case, the obstruction referred to above is the lever 61 that disturbs the linear movement of the ball screw shaft 58 when caught by the projection 60 fitted to the ball screw shaft 58, and the obstruction removal mechanism B is a mechanism comprised of a combination of the rotation regulation drive source 62, which functions to remove the lever 61 as the obstruction protruding into the range of linear movement of the ball screw shaft 58, and the connecting link 63.

The pressing mechanism 48 includes, as shown in Figs. 3A and 3B to Fig. 5A and 5B, a presser shaft 64 disposed juxtaposed to the toe angle adjusting intermediate shaft 35 in coaxial relation with the intermediate shafts 21 and 35 for turning use and use in toe angle adjustment and a coil spring 65 for elastically biasing the presser shaft 64 in a direction in which the intermediate shaft 35 for use in toe adjustment. The presser shaft 64 and the coil spring 65 are accommodated in a presser mechanism accommodating unit 19a. A thrust bearing 66 is interposed between respective confronting ends of the presser shaft 64 and the toe angle adjustment intermediate shaft 35 and, accordingly, the toe angle adjustment intermediate shaft 35 is configured to be rotatable relative to the presser shaft 64.

The transmission engaging and detaching mechanism 49 includes first to third transmission engaging and detaching mechanisms 71, 72 and 73. The first transmission engaging and detaching mechanism 71 includes the hollow motor shaft 20 of the main motor 6, the intermediate shaft 21 for turning use and the first intermediate gear 33 which is a drive side member for use in toe angle adjustment. When both of the intermediate shafts 21 and 35 are held at the reference position as shown in Figs. 3A and 3B and, also, at the sub motor failure time position as shown in Figs. 4A and 4B, the spline teeth 20a of the hollow motor shaft 20 and the spline teeth 21a of the intermediate shaft 21 for turning use are meshed with each other to thereby form the splined engagement 27 at which the hollow motor shaft 20 and the intermediate shaft 21 for turning use are connected together. When the intermediate shafts 21 and 35 are at the main motor failure time position as shown in Fig. 5A and 5B, the spline teeth 21a of the intermediate shaft 21 for turning use are disengaged from the spline teeth 20a of the hollow motor shaft 20 and the spline teeth 21a of the intermediate shaft 21 for turning use are engaged with the spline teeth 33a of the first intermediate gear 33 to thereby form a splined engagement 74 at which the intermediate shaft 21 for turning use is connected with the first intermediate gear 33.

The second transmission engaging and detaching mechanism 72 includes the intermediate shaft 21 for turning use, the first intermediate gear 33 which is a drive side member for use in toe angle adjustment, and the toe angle adjustment intermediate shaft 35. When both of the intermediate shafts 21 and 35 are held at the reference position as shown in Figs. 3A and 3B, the spline teeth 33a of the first intermediate gear 33 and the spline teeth 35a of the toe angle adjustment intermediate shaft 35 are meshed with each other to form the splined engagement 34 at which the first intermediate gear 33 and the toe angle adjustment intermediate shaft 35 are connected together. When both of the intermediate shafts 21 and 35 are held at the sub motor failure time position as shown in Figs. 4A and 4B and at the main motor failure time position as shown in Figs. 5A and 5B, the meshed engagement at the splined engagement 34 is released and, hence the first intermediate gear 33 and the toe angle adjustment intermediate shaft 35 are disconnected.

The third transmission engaging and detaching mechanism 73 includes the toe angle adjustment intermediate shaft 35, the second gear 37 which is a driven side member for use in toe angle adjustment, and the housing 19. Spline teeth 75a in the form of internal teeth are formed in a base end of the pressing mechanism accommodating unit 19a in the housing 19. When both of the intermediate shafts 21 and 35 are held at the reference position as shown in Figs. 3A and 3B, the spline teeth 35b of the toe angle adjustment intermediate shaft 35 and the spline teeth 37a of the second intermediate gear 37 are meshed with each other to form the splined engagement 36 at which the toe angle adjustment intermediate shaft 35 and the second intermediate gear 37 are connected together. When both of the intermediate shafts 21 and 35 are held at the sub motor failure time position as shown in Figs. 4A and 4B and, also, at the main motor failure time position as shown in Figs. 5A and 5B, in addition to the above described splined engagement 36, the spline teeth 35b of the toe angle adjustment intermediate shaft 35 and the spline teeth 75a of the housing 19 are meshed with each other to form a splined engagement 75. By this splined engagement 75, the toe angle adjustment intermediate shaft 35 is coupled with the housing 19 and is hence constrained from rotating.

In the switching operation of the transmission engaging and detaching mechanism 49 described hereinabove, the positional relation among the various members is so set that during a process in which both of the intermediate shafts 21 and 35 are axially moved from the reference position towards the main motor failure time position, prior to the disengagement of the toe angle adjustment intermediate shaft 35 from the first intermediate gear 33, the toe angle adjustment intermediate shaft 35 may be connected with the housing.

In order to accomplish the switching operation of the above described transmission engaging and detaching mechanism 49 smoothly, the spline teeth 21a of the intermediate shaft 21 for turning use and the spline teeth 35a and 35b of the toe angle adjustment intermediate shaft 35 have respective tooth tips each being not of a flat shape as represented by one of spline teeth 80a of a standard splined shaft 80 as shown in Fig. 9, but of an acute shape as shown in Figs. 10A and 10B or Figs. 11A and 11B. Alternatively, as a different example, the shape of the tooth tip of each of the spline teeth 21a, 35a and 35b is preferably represented by a tapered shape with no tooth tip projection as shown in Fig. 12A and 12B or Figs. 13A and 13B.

Also, as shown in Figs. 11A and 11B or Figs. 13A and 13B, a tip end of the intermediate shaft 21 for turning use, which confronts the toe angle adjustment intermediate shaft 35 may be provided with a projection 76 that protrude beyond the spline teeth 21a towards an axial end side. The projection 76 has an outer diameter which has to be smaller than the tooth bottom radius of the spline teeth 21a. If such a projection 76 is provided at the tip end of each of the intermediate shaft 21 for turning use and the toe angle adjustment intermediate shaft 35 as hereinabove described, at the time the intermediate shaft 21 for turning use and the toe angle adjustment intermediate shaft 35 are switched in position from the reference position to the main motor failure time position, the spline teeth 35a of the toe angle adjustment intermediate shaft 35 are first disengaged from the spline teeth 33a of the first intermediate gear a distance corresponding to the axial length of the projection 76 and the spline teeth 21a of the intermediate shaft 21 for turning use are subsequently meshed with the spline teeth 33a of the first intermediate gear 33. In other words, subsequent to the release of the power connection between the sub motor 7 and the toe angle adjustment intermediate shaft 35, the sub motor 7 and the intermediate shaft 21 for turning use are brought into power connection. It is to be noted that the turning shaft drive unit 14 shown in Figs. 3A and 3B to Figs. 5A and 5B makes use of an intermediate shaft 21 for turning use of a kind having such a shaft end shape as shown in Figs. 11A and 11B or Figs. 13A and 13B.

Hereinafter, the operation occurring in the turning shaft drive unit 14 of the steer-by-wire steering device of the structure described above will now be described. When both of the main motor 6 and the sub motor 7 are normally functioning, as shown in Figs. 3A and 3B the rotation of the hollow motor 20 of the main motor 6 is transmitted to the ball nut 26 through the turning power transmission mechanism 18 and, at the same time, the rotation of the hollow motor shaft 31 of the sub motor 7 is transmitted to the spline nut 40 through the toe angle adjusting drive transmission mechanism 30. The rotation of the ball nut 26 threadingly engaged with the ball screw shaft 10a of the non-rotatable split shaft 10A of the turning shaft 10 causes the non-rotatable spit shaft 10A and the rotatable split shaft 10B to be axially move integrally to accomplish the turning of the steered wheels 13. The rotation of the spline nut 40 splined to the rotatable split shaft 10B of the turning shaft 10 causes the rotatable split shaft 10B to rotate and, by this rotation, the tie rods 11 connected with a toe angle adjusting male screw portion 10c at opposite ends of the turning shaft 10 are advanced or retracted to accomplish the toe angle adjustment.

This toe angle adjustment is carried out by the operation in which the turning power transmission mechanism 18 and the toe angle adjusting power transmission mechanism 30 are coordinated with each other. In other words, when the spline nut 40 is rotated by the sub motor 7, the rotatable split shaft 10B rotates together with the spline nut 40. Since the rotatable split shaft 10B is threaded to the non-rotatable split shaft 10A at the threaded engagement portion 10C coaxially relative to each other and is axially movable relative to the spline nut 40, the rotation of the rotatable split shaft 10B allows the rotatable split shaft 10B to axially move relative to the non-rotatable split shaft 10A the axial distance corresponding to the amount of rotation at the threaded engagement portion 10C. Accordingly, the length of the turning shaft 10 comprised of the non-rotatable split shaft 10A and the rotatable split shaft 10B changes and, hence, the toe angle changes. However, the movement of only the non-rotatable split shaft 10B results in the change of the turning angles.

In view of the above, the ball nut 26 is rotated by the main motor 6 and the rotatable split shaft 10A is configured to be in the axial direction reversely relative to the direction of movement of the non-rotatable split shaft 10B. In other words, only y a quantity corresponding to the length of relative axial movement of the non-rotatable split shaft 10B relative to the rotatable split shaft 10A, the rotatable split shaft 10A is moved by the main motor 6 to maintain the center position of the entire length of the turning shaft 10. By so doing, so that the turning angles of the left and right steered wheels 13 may coincide with the target values, that is, without altering the turning angle, the toe angle adjustment is carried out. The control unit 5 of the ECU 3 performs the toe angle adjustment without altering the turning angles by moving the main motor 6 together with the sub motor 7 in this way to thereby counterbalance a biased movement of the non-rotatable split shaft 10B.

To establish the toe angle fixed case switched mode referred to above, such as, for example, in the event of the failure of the sub motor 7, the rotation regulation drive source 62 of the switch mechanism 17 is activated to change the rotation regulation mechanism 54 from a condition shown in Fig. 8A to a condition shown in Fig. 8B. By so doing, by the action of the elastic force of repulsion exerted by the spring member 51 which forms the direct acting actuator 47, both of the intermediate shafts 21 and 35 are axially moved to the sub motor failure time position as shown in Figs. 4A and 4B and are then halted.

At the sub motor failure time position, the intermediate shaft 21 for turning use is maintained by the first transmission engaging and detaching mechanism 71 as coupled with the hollow motor 20, the intermediate shaft 35 for use in tor angle adjustment is rendered by the second transmission engaging and detaching mechanism 72 to be non-coupled with the first intermediate gear 33 and the toe angle adjustment intermediate shaft 35 is held by the third transmission engaging and detaching mechanism 73 in a condition connected to the housing 19. In other words, not only is the toe angle adjusting power transmission mechanism 30 rendered to be in a power transmission disabling condition, but also the rotation of the toe angle adjustment intermediate shaft 35 is constrained. As a result thereof, only the turning by the main motor 6 is performed. As hereinabove described, since this turning shaft drive unit 14 makes use of the intermediate shaft 21 for turning use, which has such the shaft end shape as shown in Fig. 11A and 11B or Figs. 13A and 13B and the sub motor 7 and the intermediate shaft 21 for turning use are drivingly connected together upon release of the power connection between the sub motor 7 and the toe angle adjustment intermediate shaft 35, the converting operation of the transmission system takes place smoothly.

To establish the abnormal case switched mode referred to above, such as, for example, in the event of the failure of the main motor 6, the rotation regulation drive source 62 of the switch mechanism 17 is activated to return from the condition, shown in Fig. 8A, to the condition, shown in Fig. 8A, vie the condition shown in Fig. 8B. By so doing, by the action of the elastic force of repulsion exerted by the spring member 51, both of the intermediate shafts 21 and 35 are axially moved to the main motor failure time position, shown in Figs. 5A and 5B, via the sub motor failure time position referred to above.

At the main motor failure time position, by the first transmission engaging and detaching mechanism 71 and the second transmission engaging and detaching mechanism 72, the connection between the intermediate shaft 21 for turning use and the hollow motor shaft 20 and the connection between the toe angle adjustment intermediate shaft 35 and the first intermediate gear 33 are both disengaged and the condition is newly established in which the intermediate shaft 21 for turning use is connected with the first intermediate gear 33 and the toe angle adjustment intermediate shaft 35 is connected by the third transmission engaging and detaching mechanism with the housing 19. That is, the main motor 6 is disconnected from the turning power transmission mechanism 18 and the intermediate shaft 21 for turning use is connected with the toe angle adjusting power transmission mechanism 30 while the rotation of the toe toe angle adjustment intermediate shaft 35 is then constrained. Accordingly, in place of the main motor 6, the rotation of the sub motor 7 is transmitted to the turning power transmission mechanism 18 to accomplish the turning.

As hereinabove described, a failsafe function, by which the turning can be enabled even in the event of failure of the main motor can be set up in the steer-by-wire steering device 100 in such a way that, by the switch mechanism 17, in the event of the failure of the main motor 6 the main motor 6 is disengaged from the turning power transmission mechanism 18 and the change of the toe angle is halted, and, instead of the main motor 6, the rotation of the sub motor 7 is transmitted to the turning power transmission mechanism 18 to enable the turning. Also, by allowing the main motor 6 to perform the turning in the event of the failure of the sub motor 7 while the toe angle adjusting power transmission mechanism 30 is set by the switch mechanism 17 in a power transmission disabled condition, the toe angle adjusting mechanism 16 is fixed in the event of the failure of the sub motor to enable a safe running. A series of operations to change power transmission systems of the turning power transmission mechanism 18 and the toe angle adjusting power transmission mechanism 30 in the event of the failure of the main motor and also of the sub motor is assuredly accomplished by the transmission engaging and detaching mechanism 49 by axially moving the intermediate shafts 21 and 35 for turning use and use in toe angle adjustment by means of the direct acting actuator 47.

Since the turning shaft 10 is divided into two shafts, that is, the non-rotatable split shaft 10A and the rotatable split shaft 10B, and those split shafts 10A and 10B are connected with each other by means of the threaded engagement portion 10C coaxial with those split shafts 10A and 10B, the distance between the left and right tie rods can be altered by rotating the rotatable split shaft 10B relative to the non-rotatable split shaft 10A. The left and right tie rods 11 can be directly connected with the non-rotatable split shaft and the rotatable split shaft turning shaft. For this reason, the steer-by-wire steering device according to the present invention is compact in structure and the axial length of the entire portion where the turning shaft 10 is provided can be shortened and it is easy to be mounted on the vehicle. It is to be noted that if the turning shaft is not split in the axial direction, it is necessary to provide the opposite ends of the turning shaft with respective advancing and retracting members and to secure the left and right tie rods to those advancing and retracting members. For this reason, the axial length of that portion where the turning shaft is provided tends to become large.

It is to be noted that since an alternative to the turning drive source in the event of the toe angle adjustment by the sub motor 7 and the failure of the main motor 6 is an operation that takes place during the running of the vehicle, the maximum generated torque is far smaller than the torque required by the main motor 6 at the time of switching operation. Accordingly, the sub motor 7 may be of a time smaller than that of the main motor 6.

Although the present invention has been fully described in connection with the embodiments thereof with reference to the accompanying drawings which are used only for the purpose of illustration, those skilled in the art will readily conceive numerous changes and modifications within the scope of the claims annexed hereto.

### [Reference Numerals]

- 1: Steering wheel
- 2A: First steering angle sensor
- 2B: Second steering angle sensor
- 3: ECU
- 4: Reactive force actuator
- 5: Control unit
- 6: Main motor
- 7: Sub motor
- 10: Turning shaft
- 11: Tie rod
- 14: Turning shaft drive unit
- 15: Turning mechanism
- 16: Toe angle adjusting mechanism
- 17: Switch mechanism
- 18: Turning power transmission mechanism
- 30: Toe angle adjusting drive transmission mechanism
- 100: Steer-by-wire steering device
- 101: First control device
- 102: Basic control function unit
- 103: Mutual trouble diagnosis unit
- 105: Sub motor failure diagnosis unit
- 106: Abnormal case switch command unit
- 107: Sensor trouble diagnosis unit
- 108: Sensor output transfer unit
- 109: Reactive force actuator failure diagnosis unit
- 110: Toe angle fix command unit
- 201: Second control device
- 202: Basic control function unit
- 203: Mutual trouble diagnosis unit
- 205: Main motor failure diagnosis unit
- 207: Sensor trouble diagnosis unit
- 209: Sensor abnormality annunciation unit
- 210: Sub motor abnormality annunciation unit
- 211: Control device abnormality annunciation unit
- 212: Reactive force abnormality annunciation unit
- 301: External device
- 302: Annunciation unit

## Claims

1. A control device for a steer-by-wire steering device (100) having a redundancy function for controlling the steer-by-wire steering device (100);
the steer-by-wire steering device (100) comprising:
a turning shaft (10) having its left and right ends provided with respective tie rods (11),
a steering wheel (1),
a reactive force actuator (4) to apply a steering reactive force to the steering wheel (1),
a first steering angle sensor (2A) and a second steering angle sensor (2B) to detect respective steering angles of the steering wheel (1),
a main motor (6) and a sub motor (7),
a turning power transmission mechanism (18) to transmit a rotation of the main (6) motor to the turning shaft (10),
a toe angle adjusting power transmission mechanism (30) to adjust the toe angles by means of a rotation of the sub motor (7); and
a switch mechanism (17) capable of switching to an abnormal case switched mode by detaching the main motor (6) from the turning power transmission mechanism (18) and transmitting the rotation of the sub motor (7) to the turning power transmission mechanism (18) to enable a turning;
**characterized in that**
the control unit (5) comprising a first control device (101) and a second control device (201), which communicate with each other;
the first control device (101) including a basic control function unit (102) to control the reactive force actuator (4) and the sub motor (7) upon receipt of a detection signal of the first steering angle sensor (2A);
the second control device (201) including a basic control function unit (202) to control the main motor (6) upon receipt of a detection signal of the second steering angle sensor (2B);
each of the first and second control devices (101, 201) including a mutual trouble diagnosis unit (103, 203) to diagnose a mutual troubles;
the second control device (201) including a main motor failure diagnosis unit (205) to diagnose a failure of the main motor (6) and to transmit a result of diagnosis to the first control device (101);
the first control device (101) including an abnormal case switch command unit (106) to command the switch mechanism (17) to switch to the abnormal case switched mode when the first control device (101) receives from the second control device (201) a result of diagnosis that the main motor (6) fails or when the mutual trouble diagnosis unit (103) diagnoses that the second control device (201) is in a trouble.

2. The control device for the steer-by-wire steering device (100) having the redundancy function as claimed in claim 1, wherein the first steering angle sensor (2A) is operable to detect the amount of movement of the steering reactive force actuator (4) to utilize a result of detection thereof as an output of a result of detection of the steering angle of the steering wheel (1).

3. The control device for the steer-by-wire steering device (100) having the redundancy function as claimed in claim 1, wherein the abnormal case switch command unit (106) has a function of commanding the switch mechanism (17) to switch to the abnormal case switched mode when the abnormal case switch command unit (106) receives a command from a device external (301) to the first and second control devices (201, 202).

4. The control device for the steer-by-wire steering device (100) having the redundancy function as claimed in claim 1, wherein the first control device (101) or the second control device (201) includes a sensor trouble diagnosis unit (107, 207) to diagnose a trouble in the second steering angle sensor (2B) by comparing respective outputs of the first and second steering angle sensors (2A, 2B) and the abnormal case switch command unit (106) commands the switch mechanism (17) to switch to the abnormal case switched mode when the abnormal case switch command unit (106) receives a result of diagnosis made by the sensor trouble diagnosis unit (107, 207) that the second steering angle sensor (2B) is in a trouble.

5. The control device for the steer-by-wire steering device (100) having the redundancy function as claimed in claim 1, wherein the first control device (101) or the second control device includes (201) a sensor trouble diagnosis unit (107, 207) to diagnose a trouble in the second steering angle sensor (2B) by comparing respective outputs of the first and second steering angle sensors (2A, 2B) and, also, a sensor output transfer unit (108) to communicate an output of the first steering sensor (2A) to the second control device (201) when the abnormal case switch command unit (106) receives a result of diagnosis made by the sensor trouble diagnosis unit (107, 207) that the second steering angle sensor (2B) is in a trouble, and wherein the second control device (201) includes an available sensor switch unit (208) to execute a control of the main motor (6) by the basic control unit (202) with the use of an output of the first steering angle sensor (2A) transferred from the sensor output transfer unit (108), instead of with the use of an output of the second steering angle sensor (2B).

6. The control device for the steer-by-wire steering device (100) having the redundancy function as claimed in claim 1, wherein the first control device (101) or the second control device (201) includes a sensor trouble diagnosis unit (107, 207) to diagnose a trouble in the first steering angle sensor (2A) by comparing respective outputs of the first and second steering angle sensors (2A, 2B), and a sensor abnormality annunciation unit (209) to command an annunciation unit (302) located within a room of a vehicle to annunciate a result of diagnosis made by the sensor trouble diagnosis unit (107, 207) that the first steering angle sensor (2A) is in a trouble.

7. The control device for the steer-by-wire steering device (100) having the redundancy function as claimed in claim 1, wherein the first control device (101) includes a sub motor failure diagnosis unit (105) to diagnose a failure in the sub motor (7) and the second control device (201) includes a sub motor abnormality annunciation unit (210) to receive from the first control device (101) a result of diagnosis made by the sub motor failure diagnosis unit (210) that the sub motor (7) has a failure and to command an annunciation unit (302) located within a room of a vehicle to annunciate such result of diagnosis.

8. The control device for the steer-by-wire steering device (100) having the redundancy function as claimed in claim 1, wherein the second control device (201) includes a control device abnormality annunciation unit (211) to command an annunciation unit (302) located within a room of a vehicle to annunciate a result of diagnosis made by the mutual trouble diagnosis unit (203) that the first control device (101) is in a trouble.

9. The control device for the steer-by-wire steering device (100) having the redundancy function as claimed in claim 1, wherein the first control device (101) includes a reactive force actuator failure diagnosis unit (109) to diagnose a failure in the reactive force actuator (4) and a reactive force abnormality annunciation unit (212) to command an annunciation unit (302) located within a room of a vehicle to annunciate a result of diagnosis of the failure made by the reactive force actuator failure diagnosis unit (109).

10. The control device for the steer-by-wire steering device (100) having the redundancy function as claimed in claim 1, wherein the switch mechanism (17) is capable of switching to a toe angle fixed case switched mode, in which the toe angle adjusting power transmission mechanism (30) is brought to a transmission disabled condition to only allow the main motor (6) to perform a turning, and the first control unit (101) includes a sub motor failure diagnosis unit (105) to diagnose a failure in the sub motor (7) and a toe angle fix command unit (110) to switch the switch mechanism (17) to the toe angle fixed case switched mode in dependence on a result of detection of the failure made by the sub motor failure detecting unit (105).

## Patentansprüche

1. Steuervorrichtung für eine Steer-by-Wire-Lenkvorrichtung (100) mit einer Redundanzfunktion zum Steuern der Steer-by-Wire-Lenkvorrichtung (100); wobei die Steer-by-Wire-Lenkvorrichtung (100) Folgendes umfasst:
eine drehende Welle (10), deren linkes und rechtes Ende mit entsprechenden Spurstangen (11) versehen sind,
ein Lenkrad (1),
einen Gegenkraftaktuator (4) zum Anwenden einer Lenkungsgegenkraft auf das Lenkrad (1),
einen ersten Lenkwinkelsensor (2A) und einen zweiten Lenkwinkelsensor (2B) zum Detektieren entsprechender Lenkwinkel des Lenkrades (1),
einen Hauptmotor (6) und einen Untermotor (7),
einen Drehleistungsübertragungsmechanismus (18) zum Übertragen einer Rotation des Hauptmotors (6) auf die drehende Welle (10),
einen Spurwinkeleinstellung-Leistungsübertragungsmechanismus (30) zum Einstellen der Spurwinkel mittels Rotation des Untermotors (7); und
einen Schaltmechanismus (17), der in der Lage ist, in einen geschalteten Modus für anomalen Fall zu schalten durch Lösen des Hauptmotors (6) vom Drehleistungsübertragungsmechanismus (18) und Übertragen der Rotation des Untermotors (7) an den Drehleistungsübertragungsmechanismus (18) zum Ermöglichen eines Drehens;
**dadurch gekennzeichnet, dass**
die Steuereinheit (5) eine erste Steuervorrichtung (101) und eine zweite Steuervorrichtung (201) umfasst, die miteinander kommunizieren;
die erste Steuervorrichtung (101) eine Basissteuerungsfunktionseinheit (102) zum Steuern des Gegenkraftaktuators (4) und des Untermotors (7) bei Empfang eines Detektionssignals des ersten Lenkwinkelsensors (2A) umfasst;
die zweite Steuervorrichtung (201) eine Basissteuerungsfunktionseinheit (202) zum Steuern des Hauptmotors (6) bei Empfang eines Detektionssignals des zweiten Lenkwinkelsensors (2B) umfasst;
jede der ersten und zweiten Steuervorrichtungen (101, 201) eine beiderseitige Fehlerdiagnoseeinheit (103, 203) zum Diagnostizieren von beiderseitigen Fehlern umfasst;
die zweite Steuervorrichtung (201) eine Hauptmotorfehlerdiagnoseeinheit (205) zum Diagnostizieren eines Fehlers des Hauptmotors (6) und zum Übertragen eines Diagnoseergebnisses an die erste Steuervorrichtung (101) umfasst;
die erste Steuervorrichtung (101) eine Schaltanweisungseinheit für anomalen Fall (106) zum Anweisen des Schaltmechanismus (17), in den geschalteten Modus für anomalen Fall zu schalten, wenn die erste Steuervorrichtung (101) von der zweiten Steuervorrichtung (201) ein Diagnoseergebnis empfängt, dass der Hauptmotor (6) ausfällt, oder wenn die beiderseitige Fehlerdiagnoseeinheit (103) diagnostiziert, dass die zweite Steuervorrichtung (201) Probleme hat, umfasst.

2. Steuervorrichtung für die Steer-by-Wire-Lenkvorrichtung (100) mit der Redundanzfunktion nach Anspruch 1, wobei der erste Lenkwinkelsensor (2A) betreibbar ist, um den Betrag von Bewegung des Lenkungsgegenkraftaktuators (4) zu detektieren, um ein Ergebnis der Detektion desselben als eine Ausgabe eines Ergebnisses oder eine Detektion des Lenkwinkels des Lenkrads (1) zu nutzen.

3. Steuervorrichtung für die Steer-by-Wire-Lenkvorrichtung (100) mit der Redundanzfunktion nach Anspruch 1, wobei die Schaltanweisungseinheit für anomalen Fall (106) eine Funktion zum Anweisen des Schaltmechanismus (17) hat, in den geschalteten Modus für anomalen Fall zu schalten, wenn die Schaltanweisungseinheit für anomalen Fall (106) eine Anweisung von einer Vorrichtung außerhalb (301) der ersten und zweiten Steuervorrichtung (201, 202) empfängt.

4. Steuervorrichtung für die Steer-by-Wire-Lenkvorrichtung (100) mit der Redundanzfunktion nach Anspruch 1, wobei die erste Steuervorrichtung (101) oder die zweite Steuervorrichtung (201) eine Sensorfehlerdiagnoseeinheit (107, 207) zum Diagnostizieren eines Problems im zweiten Lenkwinkelsensor (2B) durch Vergleichen entsprechender Ausgänge des ersten und zweiten Lenkwinkelsensors (2A, 2B) umfasst und die Schaltanweisungseinheit für anomalen Fall (106) den Schaltmechanismus (17) anweist, in den geschalteten Modus für anomalen Fall zu schalten, wenn die Schaltanweisungseinheit für anomalen Fall (106) ein Diagnoseergebnis, erzielt durch die Sensorfehlerdiagnoseeinheit (107, 207), empfängt, dass der zweite Lenkwinkelsensor (2B) ein Problem hat.

5. Steuervorrichtung für die Steer-by-Wire-Lenkvorrichtung (100) mit der Redundanzfunktion nach Anspruch 1, wobei die erste Steuervorrichtung (101) oder die zweite Steuervorrichtung (201) eine Sensorproblemdiagnoseeinheit (107, 207) zum Diagnostizieren eines Problems im zweiten Lenkwinkelsensor (2B) durch Vergleichen entsprechender Ausgänge des ersten und zweiten Lenkwinkelsensors (2A, 2B) und, außerdem, eine Sensorausgangsübertragungseinheit (108) zum Kommunizieren eines Ausgangs des ersten Lenkwinkelsensors (2A) zur zweiten Steuervorrichtung (201), wenn die Schaltanweisungseinheit für anomalen Fall (106) ein Diagnoseergebnis, erzielt durch die Sensorproblemdiagnoseeinheit (107, 207), empfängt, dass der zweite Lenkwinkelsensor (2B) ein Problem hat, umfasst, und wobei die zweite Steuervorrichtung (201) eine verfügbare Sensorschalteinheit (208) zum Ausführen einer Steuerung des Hauptmotors (6) durch die Basissteuereinheit (202) unter Verwendung eines Ausgangs des ersten Lenkwinkelsensors (2A), übertragen von der Sensorausgangsübertragungseinheit (108), anstatt unter Verwendung eines Ausgangs des zweiten Lenkwinkelsensors (2B), umfasst.

6. Steuervorrichtung für die Steer-by-Wire-Lenkvorrichtung (100) mit der Redundanzfunktion nach Anspruch 1, wobei die erste Steuervorrichtung (101) oder die zweite Steuervorrichtung (201) eine Sensorfehlerdiagnoseeinheit (107, 207) zum Diagnostizieren eines Problems im ersten Lenkwinkelsensor (2A) durch Vergleichen entsprechender Ausgänge des ersten und zweiten Lenkwinkelsensors (2A, 2B) und eine Sensoranomalieanzeigeeinheit (209) zum Anweisen einer Anzeigeeinheit (302), die sich innerhalb eines Raums eines Fahrzeugs befindet, um ein Diagnoseergebnis, erzielt durch die Sensorproblemdiagnoseeinheit (107, 207), anzuzeigen, dass der erste Lenkwinkelsensor (2A) ein Problem hat, umfasst.

7. Steuervorrichtung für die Steer-by-Wire-Lenkvorrichtung (100) mit der Redundanzfunktion nach Anspruch 1, wobei die erste Steuervorrichtung (101) eine Untermotorfehlerdiagnoseeinheit (105) zum Diagnostizieren eines Fehlers im Untermotor (7) umfasst und die zweite Steuervorrichtung (201) eine Untermotoranomalieanzeigeeinheit (210) zum Empfangen, von der ersten Steuervorrichtung (101), eines Diagnoseergebnisses, erzielt durch die Untermotorfehlerdiagnoseeinheit (210), dass der Untermotor (7) einen Fehler aufweist, und zum Anweisen einer Anzeigeeinheit (302), die sich innerhalb eines Raums eines Fahrzeugs befindet, ein solches Diagnoseergebnis anzuzeigen, umfasst.

8. Steuervorrichtung für die Steer-by-Wire-Lenkvorrichtung (100) mit der Redundanzfunktion nach Anspruch 1, wobei die zweite Steuervorrichtung (201) eine Steuervorrichtungsanomalieanzeigeeinheit (211) zum Anweisen einer Anzeigeeinheit (302), die sich innerhalb eines Raums eines Fahrzeugs befindet, ein Diagnoseergebnis, erzielt durch die beiderseitige Problemdiagnoseeinheit (203), anzuzeigen, dass die erste Steuervorrichtung (101) ein Problem hat, umfasst.

9. Steuervorrichtung für die Steer-by-Wire-Lenkvorrichtung (100) mit der Redundanzfunktion nach Anspruch 1, wobei die erste Steuervorrichtung (101) eine Gegenkraftaktuatorfehlerdiagnoseeinheit (109) zum Diagnostizieren eines Fehlers im Gegenkraftaktuator (4) und eine Gegenkraftanomalieanzeigeeinheit (212) zum Anweisen einer Anzeigeeinheit (302), die sich innerhalb eines Raums eines Fahrzeugs befindet, ein Diagnoseergebnis des Fehlers, erzielt durch die Gegenkraftaktuatorfehlerdiagnoseeinheit (109), anzuzeigen, umfasst.

10. Steuervorrichtung für die Steer-by-Wire-Lenkvorrichtung (100) mit der Redundanzfunktion nach Anspruch 1, wobei der Schaltmechanismus (17) in der Lage ist, in einen geschalteten Modus für einen Fall mit festem Spurwinkel zu schalten, in dem der Spurwinkeleinstellung-Leistungsübertragungsmechanismus (30) in einen Zustand mit deaktivierter Übertragung gebracht wird, um nur dem Hauptmotor (6) zu ermöglichen, ein Drehen durchzuführen, und die erste Steuereinheit (101) eine Untermotorfehlerdiagnoseeinheit (105) zum Diagnostizieren eines Fehlers im Untermotor (7) und eine Spurwinkelfeststellanweisungseinheit (110) zum Schalten des Schaltmechanismus (17) in den geschalteten Modus mit festem Spurwinkel in Abhängigkeit von einem Ergebnis von Detektion des Fehlers, erzielt durch die Untermotorfehlerdetektionseinheit (105), umfasst.

## Revendications

1. Dispositif de commande pour un dispositif de direction par câble (100) présentant une fonction de redondance, permettant de commander le dispositif de direction par câble (100) ;
le dispositif de direction par câble (100) comprenant :
un arbre tournant (10) dont les extrémités gauche et droite sont pourvues de biellettes de direction respectives (11),
un volant de direction (1),
un actionneur de force de réaction (4) permettant d'appliquer une force de réaction de direction au volant de direction (1),
un premier capteur d'angle de braquage (2A) et un deuxième capteur d'angle de braquage (2B) permettant de détecter les angles de braquage respectifs du volant de direction (1),
un moteur principal (6) et un moteur auxiliaire (7),
un mécanisme de transmission de puissance de virage (18) destiné à transmettre une rotation du moteur principal (6) à l'arbre tournant (10),
un mécanisme de transmission de puissance de réglage d'angle de pincement (30) permettant de régler les angles de pincement au moyen d'une rotation du moteur auxiliaire (7) ; et
un mécanisme de commutation (17) capable de passer dans un mode de commutation en anomalie en séparant le moteur principal (6) du mécanisme de transmission de puissance de virage (18) et en transmettant la rotation du moteur auxiliaire (7) au mécanisme de transmission de puissance de virage (18) pour permettre un virage ;
**caractérisé en ce que**
l'unité de commande (5) comprend un premier dispositif de commande (101) et un deuxième dispositif de commande (201) qui communiquent entre eux ;
le premier dispositif de commande (101) comprend une unité de fonction de commande de base (102) permettant de commander l'actionneur de force de réaction (4) et le moteur auxiliaire (7) lors de la réception d'un signal de détection du premier capteur d'angle de braquage (2A) ;
le deuxième dispositif de commande (201) comprend une unité de fonction de commande de base (202) permettant de commander le moteur principal (6) lors de la réception d'un signal de détection du deuxième capteur d'angle de braquage (2B) ;
chacun des premier et deuxième dispositifs de commande (101, 201) comprend une unité de diagnostic de problème mutuel (103, 303) destinée à diagnostiquer un problème mutuel ;
le deuxième dispositif de commande (201) comprend une unité de diagnostic de panne du moteur principal (205) destinée à diagnostiquer une panne du moteur principal (6) et à transmettre un résultat de diagnostic au premier dispositif de commande (101) ;
le premier dispositif de commande (101) comprend une unité de commande de commutation en mode anomalie (106) destinée à commander le mécanisme de commutation (17) de passer au mode de commutation en anomalie lorsque le premier dispositif de commande (101) reçoit du deuxième dispositif de commande (201) un résultat de diagnostic indiquant que le moteur principal (6) est en panne ou lorsque l'unité de diagnostic de problème mutuel (103) diagnostique que le deuxième dispositif de commande (201) a un problème.

2. Dispositif de commande pour le dispositif de direction par câble (100) présentant la fonction de redondance selon la revendication 1, dans lequel le premier capteur d'angle de braquage (2A) sert à détecter le degré de mouvement de l'actionneur de force de réaction de direction (4) pour utiliser un résultat de détection dudit degré comme sortie d'un résultat de détection de l'angle de braquage du volant de direction (1).

3. Dispositif de commande pour le dispositif de direction par câble (100) présentant la fonction de redondance selon la revendication 1, dans lequel l'unité de commande de commutation en anomalie (106) a pour fonction de commander au mécanisme de commutation (17) de passer au mode de commutation en anomalie lorsque l'unité de commande de commutation en anomalie (106) reçoit une commande d'un dispositif externe (301) aux premier et deuxième dispositifs de commande (201, 202).

4. Dispositif de commande pour le dispositif de direction par câble (100) présentant la fonction de redondance selon la revendication 1, dans lequel le premier dispositif de commande (101) ou le deuxième dispositif de commande (201) comprend une unité de diagnostic de problème de capteur (107, 207) destinée à diagnostiquer un problème dans le deuxième capteur d'angle de braquage (2B) en comparant les sorties respectives des premier et deuxième capteurs d'angle de braquage (2A, 2B) et l'unité de commande de commutation en anomalie (106) commande au mécanisme de commutation (17) de passer au mode de commutation en anomalie lorsque l'unité de commande de commutation en anomalie (106) reçoit le résultat d'un diagnostic effectué par l'unité de diagnostic de problème de capteur (107, 207) indiquant que le deuxième capteur d'angle de braquage (2B) a un problème.

5. Dispositif de commande pour le dispositif de direction par câble (100) présentant la fonction de redondance selon la revendication 1, dans lequel le premier dispositif de commande (101) ou le deuxième dispositif de commande (201) comprend une unité de diagnostic de problème de capteur (107, 207) destinée à diagnostiquer un problème dans le deuxième capteur d'angle de braquage (2B) en comparant les sorties respectives des premier et deuxième capteurs d'angle de braquage (2A, 2B) et, en outre, une unité de transfert de sortie de capteur (108) destinée à communiquer une sortie du premier capteur de direction (2A) au deuxième dispositif de commande (201) lorsque l'unité de commande de commutation en anomalie (106) reçoit le résultat d'un diagnostic effectué par l'unité de diagnostic de problème de capteur (107, 207) indiquant que le deuxième capteur d'angle de braquage (2B) a un problème, et dans lequel le deuxième dispositif de commande (201) comprend une unité de commutation vers un capteur disponible (208) destinée à faire exécuter une commande du moteur principal (6) par l'unité de commande de base (202) en utilisant une sortie du premier capteur d'angle de braquage (2A) transférée depuis l'unité de transfert de sortie de capteur (108), au lieu d'utiliser une sortie du deuxième capteur d'angle de braquage (2B).

6. Dispositif de commande pour le dispositif de direction par câble (100) présentant la fonction de redondance selon la revendication 1, dans lequel le premier dispositif de commande (101) ou le deuxième dispositif de commande (201) comprend une unité de diagnostic de problème de capteur (107, 207) destinée à diagnostiquer un problème dans le premier capteur d'angle de braquage (2A) en comparant les sorties respectives des premier et deuxième capteurs d'angle de braquage (2A, 2B), et une unité d'annonce d'anomalie de capteur (209) destinée à commander à une unité d'annonce (302) située dans l'habitacle d'un véhicule d'annoncer le résultat d'un diagnostic effectué par l'unité de diagnostic de problème de capteur (107, 207) indiquant que le premier capteur d'angle de braquage (2A) a un problème.

7. Dispositif de commande pour le dispositif de direction par câble (100) présentant la fonction de redondance selon la revendication 1, dans lequel le premier dispositif de commande (101) comprend une unité de diagnostic de panne du moteur auxiliaire (105) destinée à diagnostiquer une panne dans le moteur auxiliaire (7) et le deuxième dispositif de commande (201) comprend une unité d'annonce d'anomalie du moteur auxiliaire (210) destinée à recevoir du premier dispositif de commande (101) le résultat d'un diagnostic effectué par l'unité de diagnostic de panne du moteur auxiliaire (210) indiquant que le moteur auxiliaire (7) est en panne et destinée à commander à une unité d'annonce (302) située dans l'habitacle d'un véhicule d'annoncer ce résultat de diagnostic.

8. Dispositif de commande pour le dispositif de direction par câble (100) présentant la fonction de redondance selon la revendication 1, dans lequel le deuxième dispositif de commande (201) comprend une unité d'annonce d'anomalie de dispositif de commande (211) destinée à commander à une unité d'annonce (302) située dans l'habitacle d'un véhicule d'annoncer le résultat d'un diagnostic effectué par l'unité de diagnostic de problème mutuel (203) indiquant que le premier dispositif de commande (101) a un problème.

9. Dispositif de commande pour le dispositif de direction par câble (100) présentant la fonction de redondance selon la revendication 1, dans lequel le premier dispositif de commande (101) comprend une unité de diagnostic de panne de l'actionneur de force de réaction (109) destinée à diagnostiquer une panne dans l'actionneur de force de réaction (4) et une unité d'annonce d'anomalie de la force de réaction (212) destinée à commander à une unité d'annonce (302) située dans l'habitacle d'un véhicule d'annoncer le résultat d'un diagnostic de la panne effectué par l'unité de diagnostic de panne de l'actionneur de force de réaction (109).

10. Dispositif de commande pour le dispositif de direction par câble (100) présentant la fonction de redondance selon la revendication 1, dans lequel le mécanisme de commutation (17) est capable de passer à un mode de commutation en correction d'angle de pincement, dans lequel le mécanisme de transmission de puissance de réglage d'angle de pincement (30) est amené à un état de désactivation de la transmission pour permettre seulement au moteur principal (6) d'effectuer un virage, et la première unité de commande (101) comprend une unité de diagnostic de panne du moteur auxiliaire (105) destinée à diagnostiquer une panne dans le moteur auxiliaire (7) et une unité de commande de correction de l'angle de pincement (110) destinée à faire passer le mécanisme de commutation (17) au mode de commutation en correction d'angle de pincement en fonction d'un résultat d'une détection de la panne effectuée par l'unité de détection de panne du moteur auxiliaire (105).
